# EUROPEAN PATENT APPLICATION

(11) **EP 4 420 749 A1**
(43) Date of publication of application: **28.08.2024**
(21) Application number: 22906579.2
(22) Date of filing: 13.12.2022
(51) Int. Cl.: A63B 71/06, A63B 69/36, G06F 3/01

(54) **SPORT MODE PROCESSING METHOD AND WEARABLE DEVICE**

(30) Priority: 15.12.2021 CN 202111534187
(71) Applicant: Huawei Technologies Co., Ltd., Shenzhen, Guangdong 518129 (CN)
(72) Inventor: XU, Teng, Shenzhen, Guangdong 518129 (CN); CHEN, Xiaohan, Shenzhen, Guangdong 518129 (CN); SUN, Yu, Shenzhen, Guangdong 518129 (CN)
(74) Representative: Goddar, Heinz J.
(86) International application number: PCT/CN2022/138794
(87) International publication number: WO 2023/109834

(57) **Abstract**

A sport mode processing method is disclosed, and includes: after receiving a first instruction, determining whether a wearable device (100) has loaded map data of a first sport field, where the first instruction indicates that a user is playing a target sport, and the first sport field is a sport field in which the user plays the target sport; after it is determined that the wearable device (100) has loaded the map data of the first sport field, obtaining motion data and positioning data, where the motion data represents an action feature of the user in a case in which the user plays the target sport, and the positioning data represents an action location of the user in a case in which the user plays the target sport and a location of the wearable device (100); and displaying, based on the motion data, the positioning data, and the map data of the first sport field, statistical data about playing the target sport by the user. A wearable device for performing the sport mode processing method, a computer-readable storage medium for performing the sport mode processing method, and a computer program product for performing the sport mode processing method are further included.

## Description

This application claims priority to Chinese Patent Application No. 202111534187.X, filed with the China National Intellectual Property Administration on December 15, 2021, and entitled "SPORT MODE PROCESSING METHOD AND WEARABLE DEVICE", which is incorporated herein by reference in its entirety.

### TECHNICAL FIELD

This application relates to the field of terminal technologies, and in particular, to a sport mode processing method and a wearable device.

### BACKGROUND

Golf is a leisure competitive sport. There are various types of clubs, and an environment of a course is complex. After a golf game ends, a user usually pays attention to professional data of the golf game, for example, a swing type and a strike point of each strike action, and a total cumulative quantity of strokes and a strike path for each hole. This helps the user perform comprehensive review and analysis to fully learn of a weak point of the user in golf, so that the user can implement complete post-evaluation and formulate a scientific training plan.

Currently, a wearable device for golf on the market, for example, a wristband, a watch, or pedometer shoes, usually records basic data such as a heart rate, exercise time, and a quantity of steps during a game, but does not record professional data of the golf game. This is not conducive to evaluation, review, or analysis by a user.

### SUMMARY

This application provides a sport mode processing method and a wearable device, to display a golf strike path, help instruct a user to review and analyze a golf game, and help the user learn of a swing habit of the user, a golf ball landing location, stability of performance of the user, and the like.

According to a first aspect, this application provides a sport mode processing method, applied to a wearable device.

The method includes: The wearable device determines, after receiving a first instruction, whether the wearable device has loaded map data of a first sport field, where the first instruction indicates that a user is playing a target sport, and the first sport field is a sport field in which the user plays the target sport;
the wearable device obtains motion data and positioning data after determining that the wearable device has loaded the map data of the first sport field, where the motion data represents an action feature of the user in a case in which the user plays the target sport, and the positioning data represents an action location of the user in a case in which the user plays the target sport and a location of the wearable device; and
the wearable device displays, based on the motion data, the positioning data, and the map data of the first sport field, statistical data about playing the target sport by the user.

According to the sport mode processing method provided in the first aspect, in a sport mode of the target sport, after receiving an instruction for instructing the user to play the target sport, the wearable device may determine whether the wearable device has loaded map data of a sport field in which the user plays the target sport. After determining that the wearable device has loaded the map data of the sport field, the wearable device may obtain motion data and positioning data that are generated when the user plays the target sport, where the motion data may represent an action feature of the user in a case in which the user plays the target sport, and the positioning data represents an action location of the user in a case in which the user plays the target sport and a location of the wearable device. The wearable device may display, based on the motion data, the positioning data, and the map data of the sport field, statistical data about playing the target sport by the user. Therefore, the wearable device can display the statistical data, to help instruct the user to review and analyze the target sport. This helps the user learn of a sport habit of the user, a sport status, stability of performance of the user, and the like.

In a possible design, that the wearable device receives a first instruction includes:

The wearable device displays a first control, where the first control indicates that the user is playing the target sport; and the wearable device receives the first instruction after receiving a first operation performed by the user on the first control.

In a possible design, when the wearable device includes a hardware button, that the wearable device receives a first instruction includes:

The wearable device receives a second operation performed by the user on the hardware button, where the second operation indicates that the user is playing the target sport; and
the wearable device receives the first instruction after receiving the second operation.

In a possible design, that the wearable device receives a first instruction includes:

The wearable device receives first input, where the first input indicates that the user is playing the target sport; and
the wearable device receives the first instruction after receiving a third operation performed by the user on the first input.

This provides a plurality of implementations of receiving the first instruction by the wearable device. Therefore, after receiving the first instruction, the wearable device may determine that captured related data comes from the target sport but not another sport, so that the wearable device can accurately and completely capture related data generated when the user plays the target sport.

In a possible design, that the wearable device determines, after receiving a first instruction, whether the wearable device has loaded map data of a first sport field includes:

The wearable device determines the first sport field after receiving the first instruction; and
the wearable device determines, based on an identifier of the first sport field, whether the wearable device has loaded the map data of the first sport field.

In a possible design, that the wearable device determines the first sport field includes:

The wearable device displays a second control and a third control on a first user interface, where the second control indicates a second sport field, the second sport field is a sport field obtained through positioning by the wearable device based on a location of the wearable device in the first sport field, the second control is further used to select a sport field, and the third control is used to confirm the sport field; and
the wearable device determines the second sport field as the first sport field after receiving a fourth operation performed by the user on the third control; or
the wearable device displays a fourth control on a second user interface after receiving a fifth operation performed by the user on the second control, where the fourth control is used to search for a sport field; receives second input after receiving a sixth operation performed by the user on the fourth control, where the second input indicates a third sport field; after a seventh operation performed by the user on the second input is received, determines that the user has selected the third sport field, and switches from the second user interface to the first user interface for display, where the second control on the first user interface indicates the third sport field; and determines the third sport field as the first sport field after receiving an eighth operation performed by the user on the third control.

Therefore, the wearable device may automatically obtain, through positioning, the sport field in which the user plays the target sport, and may also provide the user with a function of searching for a sport field. In this way, the wearable device can provide a plurality of manners of determining a sport field for the user, a process is flexible, and an operation is convenient. This helps improve user experience.

In a possible design, the method further includes:

The wearable device switches from the first user interface to a third user interface for display after determining that the wearable device has loaded the map data of the first sport field, where the third user interface is used to display data generated when the user plays the target sport.

Therefore, the wearable device may display, in real time, the data generated when the user plays the target sport, to help notify, in a timely manner, the user of a sport status of playing the target sport by the user.

In a possible design, the method further includes:

After determining that the wearable device has not loaded the map data of the first sport field, the wearable device obtains the map data of the first sport field from an electronic device or a server that is communicatively connected to the wearable device; and
the wearable device loads the map data of the first sport field based on the obtained map data of the first sport field.

Therefore, the wearable device may load, through the electronic device or the server, the sport field in which the user plays the target sport, to prepare for detecting the statistical data about playing the target sport by the user.

In a possible design, when the target sport is golf and the map data of the first sport field indicates a hole identifier and a field type of each location in the first sport field, that the wearable device obtains motion data and positioning data after determining that the wearable device has loaded the map data of the first sport field includes:

The wearable device starts a motion sensor and a positioning sensor after determining that the wearable device has loaded the map data of the first sport field, obtains the motion data by using the motion sensor, and obtains the positioning data by using the positioning sensor; or
the wearable device starts a motion sensor, a positioning sensor, and a sound collector after determining that the wearable device has loaded the map data of the first sport field, obtains the motion data by using the motion sensor, obtains the positioning data by using the positioning sensor, and obtains sound wave data by using the sound collector.

Therefore, the wearable device may capture motion data and positioning data in real time by using the motion sensor and the positioning sensor, or may capture motion data, sound wave data, and positioning data in real time by using the motion sensor, the sound collector, and the positioning sensor. This helps detect, in a timely and accurate manner, each strike action performed by the user when the user plays golf.

In a possible design, that the wearable device displays, based on the motion data, the positioning data, and the map data of the first sport field, statistical data about playing the target sport by the user includes:

The wearable device records strike data of all strike actions based on the motion data, the positioning data, and the map data of the first sport field, where strike data of each strike action includes at least recording time, a cumulative quantity of strokes for a hole to which the strike action belongs, a swing type, a hole identifier, a field type, a strike point, and a cumulative quantity of strokes for a field to which the strike action belongs; and
the wearable device displays the statistical data based on the strike data of all the strike actions, where the statistical data includes at least the strike data of each strike action, a total cumulative quantity of strokes for each field type, a total cumulative quantity of strokes for each hole, stroke distribution for each swing type, and a total cumulative quantity of strokes for all holes.

Therefore, the wearable device may monitor each strike action of the user in a golf course in real time, record the strike data of all the strike actions, and display a sport statistical indicator in the statistical data based on the recorded strike data of all the strike actions. This helps the user learn of a swing habit of the user, a golf ball landing location, stability of performance of the user, and the like in a timely manner, and further helps subsequently instruct the user to review and analyze a golf game.

In a possible design, for any one of all the strike actions, that the wearable device records strike data of all strike actions based on the motion data, the positioning data, and the map data of the first sport field includes:

The wearable device obtains motion data and positioning data within a same time period;
the wearable device determines, based on the motion data, whether the wearable device has detected a strike action; and
after the wearable device determines that the wearable device has detected a strike action, the wearable device records strike data of the strike action based on the positioning data and the map data of the first sport field when determining that a field type of the strike action is a tee and the strike action is the 1^{st} strike action; or
after the wearable device determines that the wearable device has detected the strike action, the wearable device determines, based on the positioning data and the map data of the first sport field when determining that a field type of the strike action is any one of a tee, a hole, or a hazard and the strike action is not the 1^{st} strike action, whether a distance between a strike point of the strike action and a strike point of a strike action with the latest recording time is greater than a first threshold; records strike data of the strike action when the distance is greater than the first threshold; or displays first information when the distance is less than or equal to the first threshold, where the first information is used to ask the user whether a strike action is performed; and records strike data of the strike action when third input is received within first duration and the third input indicates that a strike action is performed; or updates the motion data and the positioning data when fourth input is received within the first duration and the fourth input indicates that no strike action is performed, or when no user input is received after the first duration elapses; or
after the wearable device determines that the wearable device has detected the strike action, the wearable device records strike data of the strike action based on the positioning data and the map data of the first sport field when determining that a field type of the strike action is a green or a bunker.

Therefore, in a process in which the user plays golf in a golf course, the wearable device may determine, based on motion data and positioning data within a same time period, whether a strike action is detected. This eliminates a false action caused by arm swinging or a whiff performed by the user. After the wearable device determines that a strike action is detected, when a field type of the strike action is any one of a tee, a fairway, or a hazard, the wearable device may selectively record strike data of the strike action based on a moving distance that occurs when the strike action acts on a golf ball. This eliminates an action that occurs in an abnormal scenario, for example, a whiff, a trial swing, or practice. When a field type of the strike action is a green or a bunker, the wearable device may directly record strike data of the strike action according to a golf rule. Therefore, the wearable device may record strike data of all strike actions performed by the user when the user plays golf in a golf course.

In a possible design, when the motion data includes acceleration data and angular velocity data within a same time period, that the wearable device determines, based on the motion data, whether the wearable device has detected a strike action includes:

The wearable device determines a first waveform signal feature based on the acceleration data and the angular velocity data within the same time period, where the first waveform signal feature includes at least one of a quantity of wave peaks, a quantity of wave troughs, a wave peak value, a wave trough value, or a difference between a wave peak value and a wave trough value;
the wearable device determines a first probability based on the first waveform signal feature, where the first probability indicates a possibility of a strike action; and
when the first probability is greater than a second threshold, the wearable device determines that the wearable device has detected a strike action; or
when the first probability is less than or equal to the second threshold, the wearable device updates the acceleration data and the angular velocity data within the same time period.

In a possible design, when the motion data includes acceleration data and angular velocity data within a same time period, that the wearable device determines, based on the motion data, whether the wearable device has detected a strike action includes:

The wearable device determines a second waveform signal feature based on the acceleration data and the angular velocity data within the same time period, where the second waveform signal feature includes at least one of a quantity of wave peaks, a quantity of wave troughs, a wave peak value, a wave trough value, or a difference between a wave peak value and a wave trough value;
the wearable device obtains, by using the sound collector, sound wave data that belongs to a same time period as that of the acceleration data and the angular velocity data;
the wearable device determines a first sound signal feature based on the sound wave data, where the first sound signal feature includes at least one of a frequency, energy, or a peak value;
the wearable device determines a second probability based on the second waveform signal feature and the first sound signal feature, where the second probability indicates a possibility of a strike action; and
when the second probability is greater than a third threshold, the wearable device determines that the wearable device has detected a strike action; or
when the second probability is less than or equal to the third threshold, the wearable device updates the acceleration data, the angular velocity data, and the positioning data within the same time period.

In a possible design, when the motion data includes acceleration data and angular velocity data within a same time period, that the wearable device determines, based on the motion data, whether the wearable device has detected a strike action includes:

The wearable device determines a third waveform signal feature based on the acceleration data and the angular velocity data within the same time period, where the third waveform signal feature includes an up-swing displacement and/or a rotational angle;
the wearable device obtains, by using the sound collector, sound wave data that belongs to a same time period as that of the acceleration data and the angular velocity data;
the wearable device determines, based on the sound wave data, that a second sound signal feature includes at least one of a frequency, energy, or a peak value;
the wearable device determines, based on the third waveform signal feature and the second sound signal feature, a probability corresponding to a strike action, a probability corresponding to a hand-waving action, and a probability corresponding to a whiff action; and
when determining that the probability corresponding to a strike action is a largest value, the wearable device determines that the wearable device has detected a strike action; or
when determining that the probability corresponding to a strike action is not a largest value, the wearable device updates the acceleration data and the angular velocity data within the same time period.

Therefore, a plurality of implementations of determining, by the wearable device, whether the wearable device has detected a strike action are provided.

In a possible design, the statistical data further includes a golf strike path for each hole.

In a possible design, for any hole in the first sport field, that the wearable device displays a golf strike path for the hole includes:

The wearable device selects, based on the strike data of all the strike actions, all strike actions whose hole identifiers are a hole identifier of the hole, and determines recording time and strike points of all the strike actions;
the wearable device draws the golf strike path for the hole based on the recording time and the strike points of all the strike actions; and
the wearable device displays the golf strike path for the hole on an electronic map of the first sport field.

In a possible design, that the wearable device draws the golf strike path for the hole based on the recording time and the strike points of all the strike actions includes:

The wearable device connects, by using a connection line, the strike points of all the strike actions head and tail in ascending order of recording time, and draws the golf strike path for the hole.

Therefore, the wearable device can completely and vividly display a sport strike path, to help subsequently instruct the user to review and analyze a golf game. This helps the user comprehensively evaluate a weak point of the user and formulate a scientific training plan.

According to a second aspect, this application provides a wearable device, including a processor, a memory, a motion sensor, a positioning sensor, and a display. The memory, the motion sensor, the positioning sensor, and the display are all coupled to the processor. The memory is configured to store program instructions. The processor is configured to invoke the program instructions in the memory, so that the wearable device performs the sport mode processing method according to any one of the first aspect or the possible designs of the first aspect.

According to a third aspect, this application provides a chip system. The chip system is used in a wearable device including a memory, a display, and a sensor. The chip system includes a processor. When the processor executes computer instructions stored in the memory, the wearable device performs the sport mode processing method according to any one of the first aspect or the possible designs of the first aspect.

According to a fourth aspect, this application provides a computer-readable storage medium. The computer-readable storage medium stores a computer program. When the computer program is executed by a processor, a wearable device is enabled to implement the sport mode processing method according to any one of the first aspect or the possible designs of the first aspect.

According to a fifth aspect, this application provides a computer program product, including executable instructions. The executable instructions are stored in a readable storage medium. At least one processor of a wearable device may read the executable instructions from the readable storage medium, and the at least one processor executes the executable instructions, so that the wearable device implements the sport mode processing method according to any one of the first aspect or the possible designs of the first aspect.

### BRIEF DESCRIPTION OF DRAWINGS

FIG. 1 is a schematic diagram of a structure of a wearable device according to an embodiment of this application;
FIG. 2A, FIG. 2B-1, and FIG. 2B-2 are schematic flowcharts of a sport mode processing method according to an embodiment of this application;
FIG. 3A, FIG. 3B-1, and FIG. 3B-2 are schematic flowcharts of a sport mode processing method according to an embodiment of this application;
FIG. 4A to FIG. 4Z are schematic diagrams of human-computer interaction interfaces according to an embodiment of this application; and
FIG. 5 is a schematic flowchart of a sport mode processing method according to an embodiment of this application.

### DESCRIPTION OF EMBODIMENTS

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items" or a similar expression thereof indicates any combination of the items, including one of the items or any combination of a plurality of the items. For example, at least one of a, b, or c may indicate a, b, c, a combination of a and b, a combination of a and c, a combination of b and c, or a combination of a, b and c, where each of a, b, and c may be in a singular form or a plural form. In addition, the terms "first" and "second" are merely intended for a purpose of description, and shall not be understood as an indication or implication of relative importance.

This application provides a sport mode processing method and a wearable device (for example, a wristband, a watch, or pedometer shoes). In a sport mode of a target sport, after receiving an instruction for instructing a user to play the target sport, the wearable device may determine whether the wearable device has loaded map data of a sport field in which the user plays the target sport. After determining that the wearable device has loaded the map data of the sport field, the wearable device may obtain motion data and positioning data that are generated when the user plays the target sport, where the motion data may represent an action feature of the user in a case in which the user plays the target sport, and the positioning data represents an action location of the user in a case in which the user plays the target sport and a location of the wearable device. The wearable device may display, based on the motion data, the positioning data, and the map data of the sport field, statistical data about playing the target sport by the user.

Therefore, the wearable device can display the statistical data, to help instruct the user to review and analyze the target sport. This helps the user learn of a sport habit of the user, a sport status, stability of performance of the user, and the like.

A specific type of the target sport is not limited in this application. For ease of description, an example in which the target sport is golf is used for detailed description in this application. After receiving an instruction for instructing the user to play golf, the wearable device may determine whether the wearable device has loaded map data of a golf course in which the user plays golf. After determining that the wearable device has loaded the map data of the golf course, the wearable device may monitor, in real time by using a motion sensor, motion data generated when the user plays golf; and may monitor, in real time by using a positioning sensor, positioning data generated when the user plays golf.

Therefore, based on motion data and positioning data that are detected in real time and the loaded map data of the golf course, the wearable device may fully consider impact caused by abnormal scenarios such as hand waving (which may also be referred to as arm swinging), a whiff, a trial swing, and practice, and accurately detect all strike actions performed by the user in the golf course, and may record strike data of all the strike actions.

Strike data of each strike action may include, for example, recording time, a cumulative quantity of strokes for a hole to which the strike action belongs, a swing type, a hole identifier, a field type, a strike point (which may also be referred to as a swing location), a cumulative quantity of strokes for a field to which the strike action belongs, and a strike distance.

Based on the descriptions of the foregoing embodiment, the wearable device may display a sport statistical indicator in the statistical data based on the recorded strike data of all the strike actions. The sport statistical indicator may include, for example, the strike data of each strike action, a total cumulative quantity of strokes for each field type, a total cumulative quantity of strokes for each hole, stroke distribution for each swing type, and a total cumulative quantity of strokes for all holes.

Therefore, the wearable device may monitor each strike action of the user in the golf course in real time, record the strike data of all the strike actions, and display the sport statistical indicator in the statistical data based on the recorded strike data of all the strike actions. This helps the user learn of a swing habit of the user, a golf ball landing location, stability of performance of the user, and the like in a timely manner, and further helps subsequently instruct the user to review and analyze a golf game.

In addition, the wearable device may further display a sport strike path in the statistical data on an electronic map of the golf course based on the recorded strike points of all the strike actions, where the sport strike path may include a golf strike path (which may also be referred to as a golf strike track) for at least one hole.

Therefore, the wearable device can completely and vividly display the sport strike path, to help subsequently instruct the user to review and analyze a golf game. This helps the user comprehensively evaluate a weak point of the user and formulate a scientific training plan.

In addition, the wearable device may further monitor, in real time by using a sound collector, sound wave data generated when the user plays golf; and may determine, based on both the motion data and the sound wave data, each strike action performed by the user in the golf course. This helps further accurately detect all the strike actions, and further improves recording accuracy and display accuracy of the statistical data.

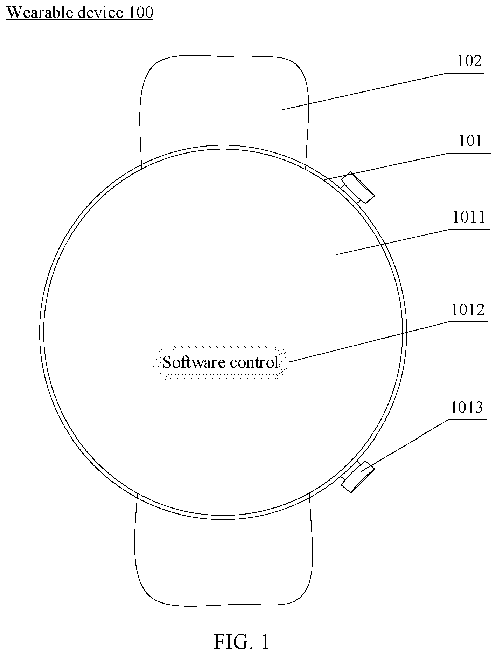

FIG. 1 is a schematic diagram of a structure of a wearable device according to an embodiment of this application. For ease of description, in FIG. 1, an example in which the wearable device 100 is a watch is used for illustration.

As shown in FIG. 1, the wearable device 100 may include a device body 101 and a wearable part 102.

The device body 101 may include a display 1011 and touch components (1012 and 1013). The display 1011 may be configured to display time, a battery level of the device body 101, a Bluetooth identifier, a received message, sport information of a user, and other content. The touch components (1012 and 1013) may be configured to receive an operation, for example, tapping, to turn on the display 1011 or enable or disable a sport mode, for example, running, golf, walking, cycling, or swimming. The touch components (1012 and 1013) may be represented by a software control 1012 and/or a button 1013.

In addition, the device body 101 may further record a quantity of moving steps, consumed calories, statistical data (for example, the statistical data may include sport statistical data and a sport strike path) of the user by using a server communicatively connected to the wearable device or by using a storage module in the device body 101.

In addition, the device body 101 may establish a wireless communication connection to an electronic device (for example, a mobile phone or a tablet computer), so that the wearable device 100 has basic functions such as an incoming call reminder and a message notification. In some embodiments, the device body 101 may establish a wireless communication connection to the electronic device through Bluetooth. The device body 101 may send the sport information of the user to the electronic device to which a connection is established. In addition, when the electronic device receives an incoming call or a message notification, the device body 101 may receive an instruction from the electronic device, to inform the user of the incoming call or the message notification. In addition, the communication connection between the wearable device and the electronic device is not limited to the foregoing functions.

The electronic device may be a mobile phone (for example, a mobile phone with a foldable screen, or a mobile phone with a large screen), a tablet computer, a notebook computer, a wearable device, a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), a smart television, a smart screen, a high-definition television, a 4K television, a smart speaker, a smart projector, or the like. A specific type of the electronic device is not limited in this application. In addition, a type of an operating system for the electronic device is not limited in this application. For example, the operating system is an Android system, a Linux system, a Windows system, an iOS system, or a Harmony operating system (Harmony operating system, HarmonyOS).

The wearable part 102 is used for mounting the device body 101. For example, the wearable part 102 may be a wristband strap, a watch strap, or another apparatus. The wearable part 102 is an apparatus that can attach the device body 101 to a wrist of the user.

In this application, a motion sensor may be configured in the device body 101. The device body 101 may capture, by using the motion sensor, motion data generated when the user plays golf. The motion data may include acceleration data and angular velocity data. The motion sensor may include an acceleration sensor and a gyroscope sensor. The acceleration sensor is configured to capture acceleration data in real time. The gyroscope sensor is configured to capture angular velocity data in real time. In addition, the motion data may further include speed data, distance data, and the like that are obtained through conversion based on the acceleration data and the angular velocity data.

Therefore, the wearable device 100 is attached to the wrist of the user, so that the motion sensor captures acceleration data and angular velocity data of the wrist of the user, to monitor each strike action and determine a swing type of each strike action based on the acceleration data and the angular velocity data of the wrist of the user.

It should be noted that, in addition to the wearable device 100, the motion sensor may alternatively be disposed in a golf club. For example, the motion sensor may be fastened to the golf club as an independent device, or the motion sensor may be integrated into the golf club as a part of the golf club, so that the device body 101 can receive motion data from the golf club in real time. This is not limited in this application. In some embodiments, the motion sensor may be an inertial measurement unit (inertial measurement unit, IMU) integrated with an acceleration sensor and a gyroscope sensor.

In addition, a sound collector (for example, a microphone) may also be configured in the device body 101, and the device body 101 may capture sound wave data by using the sound collector. Therefore, the wearable device 100 is attached to the wrist of the user, so that the sound collector captures sound wave data generated when the user plays golf, to monitor each strike action and determine a swing type and a strike field of each strike action based on the motion data in combination with the sound wave data.

A positioning sensor may be configured in the device body 101, and the device body 101 may capture positioning data in real time by using the positioning sensor, to monitor a strike point of each strike action and a location of the wearable device in real time. The positioning data may be represented by longitude and latitude coordinates, 3D coordinates, or the like, and the positioning data may represent a strike point of each strike action.

The positioning sensor may use, for example, a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

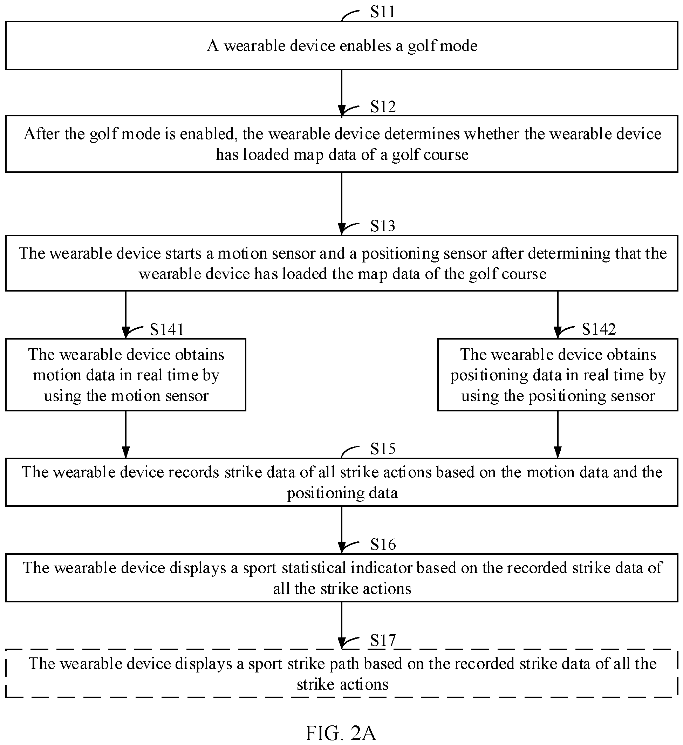

Based on the foregoing descriptions, in the following embodiments of this application, a wearable device with the structure shown in FIG. 1 is used as an example to describe in detail a sport mode processing method provided in this application with reference to FIG. 2A, FIG. 2B-1, FIG. 2B-2, FIG. 3A, FIG. 3B-1, and FIG. 3B-2.

FIG. 2A is a schematic flowchart of a sport mode processing method according to an embodiment of this application. As shown in FIG. 2A, the sport mode processing method mentioned in this application may include S11 to S17.

S11: A wearable device enables a golf mode.

For golf, the golf mode (which may also be referred to as a golf course mode or a golf sport mode) may be set on the wearable device, to distinguish between golf and other sports (for example, running, skiing, cycling, and walking). After the golf mode is enabled, the wearable device may determine that captured related data comes from golf but not another sport, so that the wearable device can accurately and completely capture related data generated when a user plays golf.

The foregoing related data may include but is not limited to motion data captured by a motion sensor and positioning data captured by a positioning sensor. In addition, the related data may further include sound wave data captured by a sound collector, and the like.

Based on the foregoing descriptions, the wearable device needs to enable the golf mode when the user plays golf. The wearable device may enable the golf mode in a plurality of manners.

Manner 1: The wearable device may enable the golf mode through input 1.

When the input 1 is speech 1, the wearable device may receive the speech 1 that is input by the user, and the speech 1 is used to trigger the wearable device to enable the golf mode. A specific implementation of the speech 1 is not limited in this application. For example, the user may wake up the wearable device through speech, and input, to the wearable device, the speech 1 of "Enable the golf mode" or "I want to play golf", so that the wearable device enables the golf mode based on the speech 1.

Therefore, the wearable device may enable the golf mode in response to the speech 1 after determining that the speech 1 is used to trigger the wearable device to enable the golf mode.

When the input 1 is an operation 1, the wearable device may receive the operation 1 performed on a touch component 1, and the operation 1 is used to trigger the wearable device to enable the golf mode. The touch component 1 may be a software control displayed on a user interface of the wearable device, or the touch component 1 may be a button disposed on the wearable device, or the touch component 1 may include a combination of a software control and a button on the wearable device. Parameters, such as a size, a shape, and a color, of the touch component 1 are not limited in this application. For example, the touch component 1 may be the touch component in FIG. 1. The operation 1 may include but is not limited to a tap operation, a double-tap operation, a touch-and-hold operation, and the like. Parameters, such as a location, a shape, and a size, of a user interface of the wearable device are not limited in this application.

Therefore, the wearable device may enable the golf mode in response to the operation 1.

Manner 2: The wearable device may enable the golf mode when determining that the user is playing golf.

The wearable device may determine, by using the motion data, whether the user is playing golf. Therefore, the wearable device may enable the golf mode when determining that the motion data indicates that the user is playing golf.

The wearable device may determine, in a plurality of manners, whether the user is playing golf.

In some embodiments, the wearable device may input a feature map (for example, an acceleration waveform feature map and an angular velocity waveform feature map) of the motion data to a classification model 1 for analysis. The wearable device may enable the golf mode when an analysis result indicates that the user is playing golf.

The classification model 1 is used to determine that the user is playing golf, and may distinguish golf from another sport. The classification model 1 is obtained by training an original model based on features of standard golf, for example, up-swing time, down-swing time, a stationary point, an up-swing distance, a down-swing distance, and a swing angle.

In some other embodiments, the wearable device may input feature maps (for example, an acceleration waveform feature map, an angular velocity waveform feature map, and a sound waveform feature map) of the motion data and the sound wave data to a classification model 2 for analysis. The wearable device may enable the golf mode when an analysis result indicates that the user is playing golf.

The classification model 2 is used to determine that the user is playing golf, and may distinguish golf from another sport. The classification model 2 is obtained by training an original model based on features of standard golf, for example, up-swing time, down-swing time, a stationary point, an up-swing distance, a down-swing distance, a swing angle, and sound.

In addition, based on the foregoing implementations, the wearable device may alternatively determine, based on the positioning data, whether the wearable device is located in a golf course, to determine whether the user is playing golf. Therefore, when the wearable device is located in a golf course, the wearable device may determine that the user is playing golf, and may enable the golf mode.

It should be noted that, in this application, an implementation of determining whether the user is playing golf is not limited to the foregoing implementations.

Manner 3: The wearable device may enable the golf mode according to an instruction 1 sent by an electronic device that is communicatively connected to the wearable device.

The electronic device may receive input 2, and in response to the input 2, the electronic device may transmit, to the wearable device, the instruction 1 corresponding to the input 2. The instruction 1 is used to trigger the wearable device to enable the golf mode.

The input 2 may be speech 2, and the speech 2 is used to trigger the wearable device to enable the golf mode. A specific implementation of the speech 2 is not limited in this application. For example, the user may wake up the electronic device through speech, and input, to the electronic device, the speech 2 of "Enable the golf mode of the wearable device".

Alternatively, the input 2 may be an operation 2 performed on a touch component 2, and the operation 2 is used to trigger the wearable device to enable the golf mode. The touch component 2 may be a software control displayed on a user interface of the electronic device, or the touch component 2 may be a button disposed on the electronic device, or the touch component 2 may include a combination of a software control and a button on the electronic device. Parameters, such as a size, a shape, and a color, of the touch component 2 are not limited in this application. The operation 2 may include but is not limited to a tap operation, a double-tap operation, a touch-and-hold operation, and the like. Parameters, such as a location, a shape, and a size, of a user interface of the electronic device are not limited in this application.

Therefore, the wearable device may enable the golf mode in response to the instruction 1.

To sum up, the wearable device may enable the golf mode, to help obtain, in real time, related data generated when the user plays golf, and detect each strike action.

Based on the foregoing descriptions, in some embodiments, when the wearable device has not enabled the golf mode and determines that the golf mode needs to be enabled, the wearable device may first vibrate for a period of time (for example, 3 seconds), and then enable the golf mode, to notify the user that the wearable device has enabled the golf mode.

In addition, the wearable device may display a prompt 1 on a display of the wearable device after enabling the golf mode, and the prompt 1 is used to notify the user that the wearable device has enabled the golf mode.

A specific implementation of the prompt 1 is not limited in this application. For example, the prompt 1 may include an icon of golf and text: "Golf mode is enabled".

In addition, the wearable device may turn off the display of the wearable device when a period of time elapses (for example, 3 seconds) and no user operation is received. This helps reduce power consumption of the wearable device.

In addition, after the wearable device enables the golf mode and receives input 3 for disabling the golf mode, the wearable device may vibrate for a period of time (for example, 3 seconds), and then disable the golf mode, to notify the user that the wearable device has disabled the golf mode.

The input 3 may be speech 3 or an operation 3 performed on a touch component 3, and is used to trigger the wearable device to disable the golf mode. A specific implementation of the speech 3 is not limited in this application. The touch component 3 may be a software control displayed on a user interface of the wearable device, or the touch component 3 may be a button disposed on the wearable device, or the touch component 3 may include a combination of a software control and a button on the wearable device. Parameters, such as a size, a shape, and a color, of the touch component 3 are not limited in this application. The operation 3 may include but is not limited to a tap operation, a double-tap operation, a touch-and-hold operation, and the like. Parameters, such as a location, a shape, and a size, of a user interface of the wearable device are not limited in this application. In addition, the touch component 3 may be the foregoing touch component 1 or a touch component different from the touch component 1.

S12: After the golf mode is enabled, the wearable device determines whether the wearable device has loaded map data of a golf course.

After the golf mode is enabled, the wearable device needs to determine a golf course in which the user plays golf.

The wearable device may determine, in a plurality of manners, the golf course in which the user plays golf. In some embodiments, the wearable device may automatically determine, based on a current location of the wearable device, a golf course obtained by the wearable device through positioning, so that the wearable device can determine, based on the golf course obtained by the wearable device through positioning, the golf course in which the user plays golf. Therefore, the wearable device may determine an identifier, for example, a name or a number, of the golf course.

In some other embodiments, the wearable device may alternatively determine, based on received input 4, an identifier, for example, a name or a number, of the golf course. The input 4 is used to notify the wearable device of the golf course in which the user plays golf. The input 4 may be speech 4 or an operation 4 performed on a touch component. For a specific implementation of the input 4, refer to the foregoing descriptions of the input 1, the input 2, or the input 3. Details are not described herein again.

Based on the foregoing descriptions, the wearable device may determine, based on the identifier of the golf course, whether the wearable device has loaded (which may also be referred to as storing) the map data of the golf course.

A golf course usually includes 18 holes, and map data of the golf course may indicate a hole identifier (for example, a number or a name) and a field type of each location in the golf course. A specific implementation of the map data of the golf course is not limited in this application. Therefore, the wearable device may determine, based on the map data of the golf course, a hole identifier of each hole in the golf course, a size and a location of an area in which the hole is located, and a field type, a field size, a field location, and the like of each field included in the area in which the hole is located.

For example, the map data of the golf course may include flags (flag) of all pixels in a vectored picture. A flag of each pixel indicates a hole identifier and a field type that correspond to the pixel, and the flag may be represented in a form of a number, a binary value, a character, a letter, or the like.

The wearable device may perform S13 after determining that the wearable device has loaded the map data of the golf course.

The wearable device may load the map data of the golf course in a plurality of manners after determining that the wearable device has not loaded the map data of the golf course.

In some embodiments, the wearable device may send an instruction 2 to the server that is communicatively connected to the wearable device. Therefore, the server may transmit the map data of the golf course to the wearable device in response to the instruction 2, so that the wearable device can load the map data of the golf course.

In some other embodiments, the wearable device may send an instruction 3 to the electronic device that is communicatively connected to the wearable device. Therefore, in response to the instruction 3, the electronic device determines whether the electronic device has loaded the map data of the golf course.

When determining that the electronic device has loaded the map data of the golf course, the electronic device may transmit the map data of the golf course to the wearable device, so that the wearable device can load the map data of the golf course. When determining that the electronic device has not loaded the map data of the golf course, the electronic device may send an instruction 4 to the server, so that the server can transmit the map data of the golf course to the wearable device. Therefore, the wearable device may load the map data of the golf course.

The instruction 2, the instruction 3, and the instruction 4 all indicate that the wearable device needs to load the map data of the golf course. The instruction 2, the instruction 3, and the instruction 4 may be represented in a form of an identifier, a binary value, a letter, or the like. For example, the instruction 2, the instruction 3, and the instruction 4 carry the name of the golf course.

To sum up, the wearable device may load the map data of the golf course through the server and/or the electronic device, to prepare for detecting, in real time, each strike action performed by the user when the user plays golf.

In addition, the wearable device may draw an electronic map of the golf course based on the map data of the golf course, and display the electronic map. The electronic map of the golf course displays areas in which all holes are located, or may display an area in which a corresponding hole is located when the user plays golf. A hole identifier, a field type, a field size, a field location, and the like may be marked for an area in which each hole is located.

S13: The wearable device starts the motion sensor and the positioning sensor after determining that the wearable device has loaded the map data of the golf course.

The wearable device needs to spend specific time in loading the map data of the golf course. Therefore, the wearable device may start the motion sensor and the positioning sensor after determining that the wearable device has loaded the map data of the golf course, to prevent a device from consuming power of the wearable device due to long-time startup. This helps reduce power consumption of the wearable device.

In the manner 1 of enabling the golf mode, the wearable device may start the motion sensor and the positioning sensor in response to the input 1 after determining that the wearable device has loaded the map data of the golf course.

In the manner 2 of enabling the golf mode, the wearable device has started the motion sensor because the wearable device needs to capture the motion data by using the motion sensor. Therefore, the wearable device may start the positioning sensor after determining, based on the motion data, that the user is playing golf and determining that the wearable device has loaded the map data of the golf course.

In the manner 3 of enabling the golf mode, the wearable device may start the motion sensor and the positioning sensor in response to the instruction 1 after determining that the wearable device has loaded the map data of the golf course.

S141: The wearable device obtains motion data in real time by using the motion sensor.

S142: The wearable device obtains positioning data in real time by using the positioning sensor.

There is no time sequence between S141 and S142, and S141 and S142 may be performed simultaneously or sequentially.

A software interface and/or a hardware interface may be disposed between the wearable device and the motion sensor, so that the wearable device can obtain motion data in real time through the interface. A software interface and/or a hardware interface may be disposed between the wearable device and the positioning sensor, so that the wearable device can obtain positioning data in real time through the interface.

Therefore, the wearable device may capture motion data and positioning data in real time. This helps detect, in a timely and accurate manner, each strike action performed by the user when the user plays golf.

The motion data may represent an action feature, for example, a swing type, of each strike action performed by the user when the user plays golf. The positioning data may represent a strike point of each strike action performed by the user when the user plays golf and a location of the wearable device in the golf course. For specific implementations of the motion data and the positioning data, refer to the foregoing description content. Details are not described herein again.

S15: The wearable device records strike data of all strike actions based on the motion data and the positioning data.

The wearable device may monitor, in real time based on the motion data and the positioning data that are obtained in real time, an action performed by the user when the user plays golf. Therefore, the wearable device may detect each strike action performed by the user, and may record strike data of each strike action.

For each strike action, the strike data may include, for example, recording time, a cumulative quantity of strokes for a hole to which the strike action belongs, a swing type, a hole identifier, a field type, a strike point, a cumulative quantity of strokes for a field to which the strike action belongs, and a strike distance.

The recording time is a time point (which may also be referred to as a moment) at which the wearable device records the strike data of the strike action or a time point at which the wearable device determines the strike action.

The cumulative quantity of strokes for the hole to which the strike action belongs is a sequence number of the strike action in a total cumulative quantity of strokes for the hole to which the strike action belongs. The hole to which the strike action belongs is a hole in an area, in the golf course, in which the strike action is performed. To be specific, the hole identifier may indicate the hole to which the strike action belongs. The total cumulative quantity of strokes for the hole to which the strike action belongs is a total quantity of strike actions in an area, in the golf course, in which the hole to which the strike action belongs is located. The hole identifier may be a sequence number, a name, or the like for identification.

For example, assuming that the strike action is an i^{th} strike action for a hole 1, the hole to which the strike action belongs is the hole 1, and the cumulative quantity of strokes for the hole to which the strike action belongs is i, where i is a positive integer.

The swing type is a type of an action in which a golf club hits a golf ball after the user swings the golf club, so that the golf ball moves and drives the golf club forward. The swing type may include a full swing, a 1/2 swing, a 1/4 swing, and putting. In addition, when the field type is a bunker (which may also be referred to as a bunker) or a green, the swing type may further include a whiff. The whiff is a type of action in which the golf club slides over a golf ball without hitting the golf ball after the user swings the golf club.

The strike point is a location, in the golf course, at which the strike action is performed, namely, a swing location. The strike point may be determined based on the positioning data, and the strike point may be represented by longitude and latitude coordinates, 3D coordinates, or the like.

The cumulative quantity of strokes for the field to which the strike action belongs is a sequence number of the strike action in a total cumulative quantity of strokes for the field to which the strike action belongs. The field to which the strike action belongs is a field, in the golf course, in which the strike action is performed. To be specific, the field type may indicate the field to which the strike action belongs. The total cumulative quantity of strokes for the field to which the strike action belongs is a total quantity of strike actions in all fields, in the golf course, whose field types are the same as the field type of the field to which the strike action belongs. The field type may include a tee, a fairway, a bunker, a green, a hazard, and the like. The hazard may include, for example, a hazard in which trees are located and a hazard in which a pond is located.

For example, assuming that the strike action is a j^{th} strike action for a hole, the field to which the strike action belongs is the hole, and the cumulative quantity of strokes for the field to which the strike action belongs is j, where j is a positive integer.

The strike distance is a moving distance that occurs when the strike action acts on a golf ball.

It should be noted that, in this application, a bunker shot action and a ground hit action each are also a type of strike action. The bunker shot action is an action that the golf club hits sand and hits a golf ball out of the bunker after the user swings the golf club. The ground hit action is an action that the golf club hits the grass without hitting a golf ball after the user swings the golf club.

According to a golf rule, the user is not allowed to perform a trial swing or practice in the bunker or the green, and the user is allowed to perform a trial swing and practice in the tee, the fairway, or the hazard. Therefore, for different field types, a determining criterion for detecting, by the wearable device based on the motion data and the positioning data that are obtained in real time, whether each action performed by the user when the user plays golf is a strike action varies.

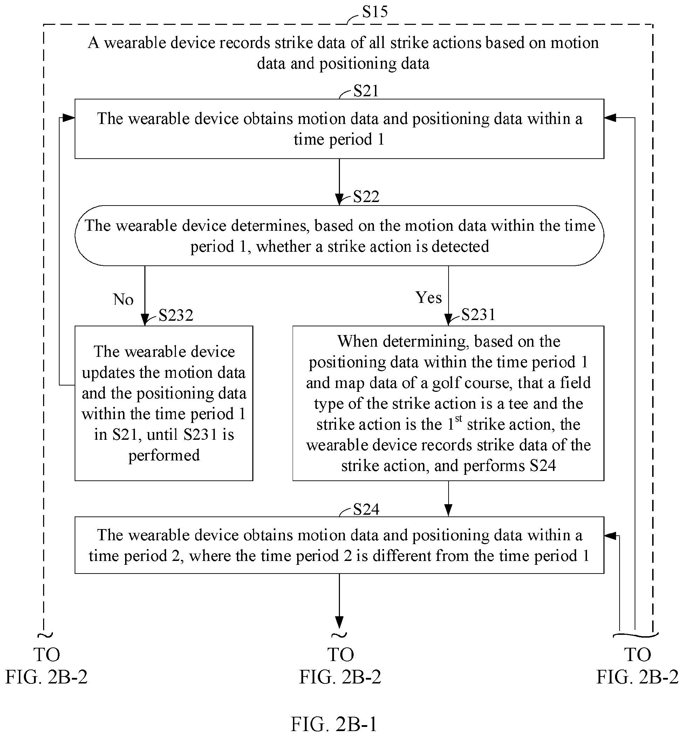

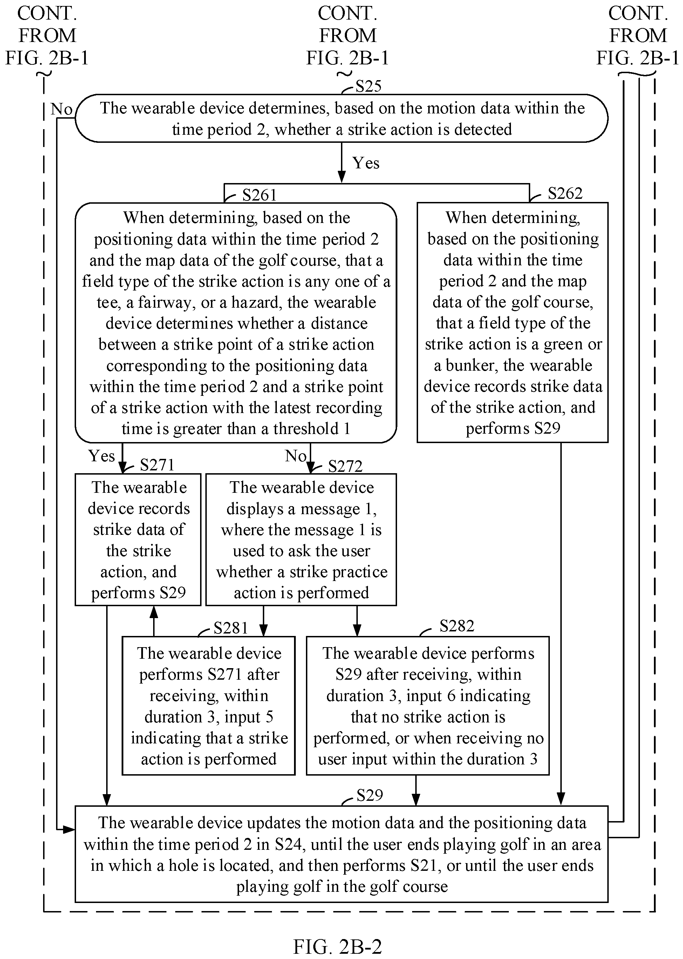

With reference to FIG. 2B-1 and FIG. 2B-2, the following describes in detail a specific implementation of recording, by the wearable device, the strike data of all the strike actions based on the motion data and the positioning data in S15.

FIG. 2B-1 and FIG. 2B-2 are a schematic flowchart of a sport mode processing method according to an embodiment of this application. As shown in FIG. 2B-1 and FIG. 2B-2, the sport mode processing method mentioned in this application may include S21 to S29.

In a case in which a user plays golf in an area in which any hole in a golf course is located:
S21 to S232 describe a specific implementation process of detecting, by a wearable device, the 1^{st} strike action in an area in which the hole is located, and recording strike data of the 1^{st} strike action.
S24 to S29 describe a specific implementation process of detecting, by the wearable device, a remaining strike action other than the 1^{st} strike action in the area in which the hole is located, and recording strike data of the remaining strike action.
S21: The wearable device obtains motion data and positioning data within a time period 1.

Based on S141 and S142, the wearable device may obtain motion data and positioning data in real time in an entire process of playing golf by the user. Therefore, the wearable device may obtain motion data and positioning data within a same time period (namely, the time period 1), to help analyze a complete action performed by the user when the user plays golf.

Specific duration of the time period 1 is not limited in this application. In some embodiments, duration of the time period 1 may be set to be longer than or equal to duration in which the user performs one strike action.

For example, in duration 1 that starts from a time point at which a motion sensor and a positioning sensor are started, the wearable device may capture the motion data and the positioning data within the time period 1.

Alternatively, in duration 1 that starts from a time point at which it is determined that the user enters an area in which a new hole in the golf course is located, the wearable device may capture the motion data and the positioning data within the time period 1.

Therefore, the wearable device may obtain motion data of duration 11 from the motion data within the time period 1, and obtain positioning data of duration 12 from the positioning data within the time period 1.

Specific values of the duration 11 and the duration 12 are not limited in this application, provided that both the duration 11 and the duration 12 are within the time period 1.

This ensures that the wearable device can determine one strike action based on the motion data and the positioning data within the same time period.

S22: The wearable device determines, based on the motion data within the time period 1, whether a strike action is detected.

If a strike action is detected, the wearable device performs S231. If no strike action is detected, the wearable device performs S232.

According to a golf rule, when playing golf, the user may perform at least one of a hand-waving action, a whiff action, or a strike action. Therefore, the wearable device may determine, based on the motion data within the time period 1, whether a strike action is detected. This can eliminate an action caused by misoperation, namely, hand waving or a whiff, of the user.

The wearable device may determine, in a plurality of manners, whether a strike action is detected.

In some embodiments, the wearable device captures acceleration data and angular velocity data within the time period 1 based on an acceleration sensor and a gyroscope sensor in the motion sensor respectively. The wearable device may obtain a first waveform signal feature based on the acceleration data and the angular velocity data within the time period 1. The first waveform signal feature may include but is not limited to at least one of a quantity of wave peaks, a quantity of wave troughs, a wave peak value, a wave trough value, or a difference between a wave peak value and a wave trough value.

Therefore, the wearable device may determine a first probability based on the first waveform signal feature. The first probability indicates a possibility of a strike action. When the first probability is greater than a threshold 2, the wearable device may determine that a strike action is detected. When the first probability is less than or equal to the threshold 2, the wearable device may determine that no strike action is detected. A specific value of the threshold 2 is not limited in this application.

To sum up, the wearable device may determine, based on the motion data within the time period 1, whether a strike action is detected, to eliminate abnormal scenarios such as hand waving and a whiff.

S231: When determining, based on the positioning data within the time period 1 and map data of the golf course, that a field type of the strike action is a tee and the strike action is the 1^{st} strike action, the wearable device records strike data of the strike action, and performs S24.

After determining that a strike action is detected, the wearable device may determine, based on the positioning data within the time period 1, a location of the wearable device in a case in which the user performs the strike action. Based on the location of the wearable device and the map data of the golf course, the wearable device may determine, in an area in which the hole is located, a specific field in which the wearable device is located, that is, a field type of the strike action.

When it is determined that no strike data of a strike action in the area in which the hole is located is recorded, or when it is determined that a current total cumulative quantity of strokes for the hole is 0, the wearable device may determine that the strike action is the 1^{st} strike action.

Therefore, when it is determined that the field type of the strike action is the tee and the strike action is the 1^{st} strike action, the wearable device may record strike data of the 1^{st} strike action, and perform S24, so that the wearable device can continue to detect a remaining strike action in the area in which the hole is located and record strike data of the remaining strike action.

For a cumulative quantity of strokes for a hole to which the strike action belongs, because a current total cumulative quantity of strokes for the hole is 0, the wearable device may update, to 1, the cumulative quantity of strokes for the hole to which the strike action belongs.

For a cumulative quantity of strokes for a field to which the strike action belongs, because a current total cumulative quantity of strokes for the field is 0, the wearable device may update, to 1, the cumulative quantity of strokes for the field to which the strike action belongs.

S232: The wearable device updates the motion data and the positioning data within the time period 1 in S21, until S231 is performed.

After determining that no strike action is detected, the wearable device may update the motion data and the positioning data within the time period 1 in S21, so that the wearable device captures, to a maximum extent, motion data and positioning data that correspond to a complete action.

In some embodiments, the wearable device may update the motion data and the positioning data within the time period 1 in S21 to motion data and positioning data within a time period 1'.

Specific duration of the time period 1' is not limited in this application, provided that at least one time point in the time period 1' is later than the latest time point in the time period 1. In addition, duration of the time period 1' may be the same as or different from that of the time period 1.

For example, in duration 1' that starts from the latest time point in the time period 1, the wearable device may capture the motion data and the positioning data within the time period 1'.

Therefore, the wearable device may obtain motion data of duration 11' from the motion data within the time period 1', and obtain positioning data of duration 12' from the positioning data within the time period 1'.

Specific values of the duration 11' and the duration 12' are not limited in this application, provided that both the duration 11' and the duration 12' are within the time period 1'.

This ensures that the wearable device can determine one strike action based on the motion data and the positioning data within the same time period.

To sum up, the wearable device may detect the 1^{st} strike action, and may record the strike data of the 1^{st} strike action.

S24: The wearable device obtains motion data and positioning data within a time period 2, where the time period 2 is different from the time period 1.

Based on S141 and S142, the wearable device may obtain motion data and positioning data in real time in an entire process of playing golf by the user. Therefore, the wearable device may obtain motion data and positioning data within a same time period (namely, the time period 2), to help analyze a complete action performed by the user when the user plays golf.

Specific duration of the time period 2 is not limited in this application, provided that at least one time point in the time period 2 is later than the latest time point in the time period 1. In addition, duration of the time period 2 may be the same as or different from that of the time period 1. In some embodiments, the duration of the time period 2 may be set to be longer than or equal to duration in which the user performs one strike action.

For example, in duration 2 that starts from a time point at which a previous strike action is detected, the wearable device may capture the motion data and the positioning data within the time period 2.

Therefore, the wearable device may obtain motion data of duration 21 from the motion data within the time period 2, and obtain positioning data of duration 22 from the positioning data within the time period 2.

Specific values of the duration 21 and the duration 22 are not limited in this application, provided that both the duration 21 and the duration 22 are within the time period 2.

This ensures that the wearable device can determine one strike action based on the motion data and the positioning data within the same time period.

S25: The wearable device determines, based on the motion data within the time period 2, whether a strike action is detected.

If a strike action is detected, the wearable device performs S261 or S262. If no strike action is detected, the wearable device performs S29.

For a specific implementation process of S25, refer to the description content of the embodiment of S22 shown in FIG. 2B-1. Details are not described herein again.

S261: When determining, based on the positioning data within the time period 2 and the map data of the golf course, that a field type of the strike action is any one of the tee, a fairway, or a hazard, the wearable device determines whether a distance between a strike point of a strike action corresponding to the positioning data within the time period 2 and a strike point of a strike action with the latest recording time is greater than a threshold 1.

If the distance is greater than the threshold 1, the wearable device performs S271. If the distance is not greater than the threshold 1, the wearable device performs S272.

After determining that a strike action is detected, the wearable device may determine a field type of the strike action based on the positioning data within the time period 2 and the loaded map data of the golf course. For a specific implementation process, refer to the description content of the embodiment of S231. Details are not described herein again. In addition, the wearable device may further determine a location, in the golf course or in the area in which the hole is located, at which the strike action is performed, that is, a strike point of the strike action.

When the field type of the strike action is any one of the tee, the fairway, or the hazard, the wearable device may determine whether a distance between a strike point of the strike action and a strike point of a strike action with the latest recording time is greater than the threshold 1. Continuity of a swing performed by the user is fully considered. This avoids a phenomenon that a whiff, a trial swing, or practice performed by the user is mis-determined as a strike action.

The strike action with the latest recording time is a strike action whose recording time is closest to current time among all strike actions recorded before a current moment.

For example, it is assumed that the wearable device records the 1^{st} strike action and the 2^{nd} strike action before the current moment. In this case, after determining that another strike action is detected, the wearable device may determine that the strike action with the latest recording time is the 2^{nd} strike action.

The distance between the strike point of the strike action and the strike point of the strike action with the latest recording time represents a moving distance that occurs when the strike action acts on a golf ball, that is, a strike distance of the strike action.

A specific value of the threshold 1 is not limited in this application. For example, the threshold 1 may be set to be equal to an average distance by which the user performs one strike action.

S271: The wearable device records strike data of the strike action, and performs S29.

When the distance between the strike point of the strike action and the strike point of the strike action with the latest recording time is greater than the threshold 1, the wearable device may determine that the golf ball moves by a large distance after the user performs the strike action. Therefore, the wearable device records strike data of the strike action, and performs S29, so that the wearable device can continue to detect a remaining strike action in the area in which the hole is located and record strike data of the remaining strike action.

For a cumulative quantity of strokes for a hole to which the strike action belongs, because a current total cumulative quantity of strokes for the hole is N, the wearable device may update, to N+1, the cumulative quantity of strokes for the hole to which the strike action belongs. N herein is a positive integer.

For a cumulative quantity of strokes for a field to which the strike action belongs, because a current total cumulative quantity of strokes for the field is M, the wearable device may update, to M+1, the cumulative quantity of strokes for the field to which the strike action belongs. M herein is a positive integer.

S272: The wearable device displays a message 1, where the message 1 is used to ask the user whether a strike action is performed.

When the distance between the strike point of the strike action and the strike point of the strike action with the latest recording time is less than or equal to the threshold 1, the wearable device may determine that the golf ball moves by a small distance or the golf ball may not move after the user performs the strike action. Therefore, the wearable device may display the message 1, to help eliminate, based on user input, a case that the strike action may be an action that occurs in an abnormal case, for example, a whiff, a trial swing, or practice.

A specific implementation of the message 1 is not limited in this application.

For example, it is determined that the strike action is a whiff action. The message 1 may be used to notify the user that the strike action is a whiff action and strike data of the strike action is not recorded, or notify the user that the strike action is a whiff action and ask the user whether to record strike data of the strike action, or notify the user that a moving distance is excessively small and strike data of the strike action is not recorded.

S281: The wearable device performs S271 after receiving, within duration 3, input 5 indicating that a strike action is performed.

S282: The wearable device performs S29 after receiving, within the duration 3, input 6 indicating that no strike action is performed, or when receiving no user input within the duration 3.

The input 5 or the input 6 may be speech or a tap operation, a double-tap operation, a touch-and-hold operation, or the like performed on a touch component. For a specific implementation of the input 5 or the input 6, refer to the foregoing descriptions of the input 1, the input 2, or the input 3. Details are not described herein again.

A specific value of the duration 3 is not limited in this application. In addition, the message 1 may be further used to display the duration 3, to help indicate the user to choose, within the duration 3, whether a strike action, a whiff action, a trial swing action, or a practice action is performed.

To sum up, the wearable device eliminates, based on user input, an action that may be a whiff, a trial swing, or practice, and may determine that the wearable device detects a strike action.

S262: When determining, based on the positioning data within the time period 2 and the map data of the golf course, that a field type of the strike action is the green or the bunker, the wearable device records strike data of the strike action, and performs S29.

Based on the descriptions of the embodiment of S261, when the field type of the strike action is the green or the bunker, the wearable device may record the strike data of the strike action, and perform S29, so that the wearable device can continue to detect a remaining strike action in the area in which the hole is located and record strike data of the remaining strike action.

S29: The wearable device updates the motion data and the positioning data within the time period 2 in S24, until the user ends playing golf in the area in which the hole is located, and then performs S21, or until the user ends playing golf in the golf course.

After determining that no strike action is detected, the wearable device may update the motion data and the positioning data within the time period 2 in S24, so that the wearable device captures, to a maximum extent, motion data and positioning data that correspond to a complete action.

In some embodiments, the wearable device may update the motion data and the positioning data within the time period 2 in S24 to motion data and positioning data within a time period 2'.

Specific duration of the time period 2' is not limited in this application, provided that at least one time point in the time period 2' is later than the latest time point in the time period 2. In addition, duration of the time period 2' may be the same as or different from that of the time period 2.

For example, in duration 2' that starts from the latest obtaining time point in the time period 2', the wearable device captures the motion data and the positioning data within the time period 2'.

Therefore, the wearable device may obtain motion data of duration 21' from the motion data within the time period 2', and obtain positioning data of duration 22' from the positioning data within the time period 2'.

Specific values of the duration 21' and the duration 22' are not limited in this application, provided that both the duration 21' and the duration 22' are within the time period 2'.

This ensures that the wearable device can determine one strike action based on the motion data and the positioning data within the same time period.

To sum up, when it is determined that the user ends playing golf in the area in which the hole is located, the wearable device does not need to continue to update the motion data and the positioning data within the time period 2 in S24, and may perform S21, so that the wearable device can continue to detect all strike actions in an area in which another hole in the golf course is located, and record corresponding strike data of all the strike actions, until it is determined that the user ends playing golf in the golf course. Then the wearable device may turn off the motion sensor and the positioning sensor, and disable the golf mode, to end strike action detection performed when the user plays golf.

The wearable device may determine, in a plurality of manners, that the user ends playing golf in an area in which a hole is located, and that the user ends playing golf. For a specific implementation, refer to the descriptions of determining, by the wearable device, that the user is playing golf in S12. Details are not described herein again.

In addition, the wearable device may display a prompt 2 on the display of the wearable device after disabling the golf mode, and the prompt 2 is used to notify the user that the wearable device has disabled the golf mode. A specific implementation of the prompt 2 is not limited in this application. For example, the prompt 2 may include text: "Golf mode is disabled".

Based on the descriptions of the foregoing embodiment, in a process in which the user plays golf in a golf course, the wearable device may determine, based on motion data and positioning data within a same time period, whether a strike action is detected. This eliminates a false action caused by arm swinging or a whiff performed by the user. After the wearable device determines that a strike action is detected, when a field type of the strike action is any one of a tee, a fairway, or a hazard, the wearable device may selectively record strike data of the strike action based on a moving distance that occurs when the strike action acts on a golf ball. This eliminates an action that occurs in an abnormal scenario, for example, a whiff, a trial swing, or practice. When a field type of the strike action is a green or a bunker, the wearable device may directly record strike data of the strike action according to a golf rule. Therefore, the wearable device may record strike data of all strike actions performed by the user when the user plays golf in a golf course.

In addition, after determining that a strike action is detected, the wearable device may further display strike data of the strike action in real time.

When any strike action is detected, the wearable device may further perform the following content:
When determining that a field type of the strike action is the green, the wearable device may display a message 2, where the message 2 is used to notify the user that the field type of the strike action is the green and a swing type of the strike action is recorded as putting. A specific implementation of the message 2 is not limited in this application.

When determining that a field type of the strike action is the bunker, the wearable device may display a message 3, where the message 3 is used to notify the user that the field type of the strike action is the bunker and ask the user whether a strike action is detected. A specific implementation of the message 3 is not limited in this application.

When it is determined that a field type of the strike action is a hazard in which trees are located or a hazard in which a pond is located, due to precision of the positioning sensor and environmental complexity of the golf course, the wearable device may not accurately determine a strike point of the strike action. For example, the wearable device may identify, through positioning, a strike point of the strike action to be in the hazard in which the trees are located or the hazard in which the pond is located. Therefore, the wearable device may display a message 4, where the message 4 is used to ask the user about a strike point of the strike action. A specific implementation of the message 4 is not limited in this application.

After determining that the user switches from one field type to another field type, the wearable device may use a message 5, where the message 5 is used to notify the user of the field type change, precautions (for example, practice or a trial swing cannot be performed) for a field to which the user belongs, and the like.

After determining that the user switches from one hole to another hole, the wearable device may use a message 6, where the message 6 is used to notify the user of a hole change, precautions for a hole to which the user belongs, and the like.

The foregoing message mentioned in this application may be represented by text, an image, or the like in real time. The wearable device may display the foregoing message on a user interface in a form of a window in a floating manner, or may embed the foregoing message in a user interface for display. This is not limited in this application either. In addition, when displaying the foregoing message, the wearable device may vibrate and/or produce a beep sound to notify the user.

To sum up, when determining that a strike action is detected, the wearable device may notify the user of a hole, a field, a swing type, and the like in a timely manner based on strike data of the strike action, and also notify the user of an abnormal scenario such as a green, a bunker, a trial swing, practice, a whiff, or a hazard in a timely manner, to avoid false identification or missing detection by the wearable device in the abnormal scenario.

In addition, the wearable device may further re-confirm the strike action from the user based on the foregoing message, so that the wearable device can determine, based on user input, whether to record the strike data of the strike action. Display duration, a display mode, and a user input mode of the foregoing message are not limited in this application.

S16: The wearable device displays a sport statistical indicator based on the recorded strike data of all the strike actions.

The wearable device may display the sport statistical indicator by using a list, an array, a table, a histogram, a line graph, or the like by analyzing the recorded strike data of all the strike actions.

The sport statistical indicator may include, for example, the strike data of each strike action, a total cumulative quantity of strokes for each field type, a total cumulative quantity of strokes for each hole, stroke distribution for each swing type, and a total cumulative quantity of strokes for all holes.

In addition, the wearable device may further send the recorded strike data of all the strike actions to the electronic device, so that the electronic device can display the sport statistical indicator on the electronic map of the golf course.

S 17: The wearable device displays a sport strike path based on the recorded strike data of all the strike actions.

It should be noted that S17 is optional.

The sport strike path includes a golf strike path for at least one hole.

For a golf strike path for any hole, the wearable device may select, from the recorded strike data of all the strike actions, all strike actions whose hole identifiers indicate the hole, and determine recording time and strike points of all the strike actions. The wearable device may draw the golf strike path for the hole based on the recording time and the strike points of all the strike actions.

In some embodiments, the wearable device may connect, by using a connection line, the strike points of all the strike actions head and tail in ascending order of recording time, and draw the golf strike path for the hole.

To be specific, the wearable device connects the strike points of all the strike actions by using a connection line, and uses the connection line as the golf strike path for the hole. In the connection line, a strike point of a strike action with the earliest recording time is a starting point, a strike point of a strike action with the latest recording time is an ending point, and strike points of two strike actions with adjacent recording time are connected.

To sum up, the wearable device may draw a golf strike path for each hole in the golf course. Therefore, the wearable device may display the sport strike path on the electronic map of the golf course in a floating manner.

A manner of displaying the sport strike path by the wearable device is not limited in this application.

In some embodiments, the wearable device may dynamically display, on the electronic map of the golf course, a process of drawing the sport strike path. For example, for a golf strike path for a hole, the wearable device may display a corresponding dynamic process of connecting strike points of all strike actions by using a connection line.

In some other embodiments, the wearable device may statically display the sport strike path on the electronic map of the golf course.

In addition, the wearable device may further display a strike point of a strike action with the earliest recording time and a strike point of a strike action with the latest recording time in the sport strike path, and/or display a strike point of each strike action in the sport strike path.

In addition, the wearable device may further distinguish or highlight the sport strike path on the electronic map of the golf course in a colored, bold, or graphics form, or the like.

In addition, the wearable device may further send the recorded strike data of all the strike actions to the electronic device, so that the electronic device can display the sport strike path on the electronic map of the golf course.

Based on the descriptions of the embodiments of FIG. 2A, FIG. 2B-1, and FIG. 2B-2, fully considering influencing factors such as the golf rule, the field type of the golf course, and a sport feature of golf, the wearable device may detect, in real time, each strike action performed by the user when the user plays golf, and may record strike data of all strike actions, to accurately display statistical data. This helps the user learn of a swing habit of the user, a golf ball landing location, stability of performance of the user, and the like in a timely manner, and further helps the user comprehensively evaluate a weak point of the user and formulate a scientific training plan.

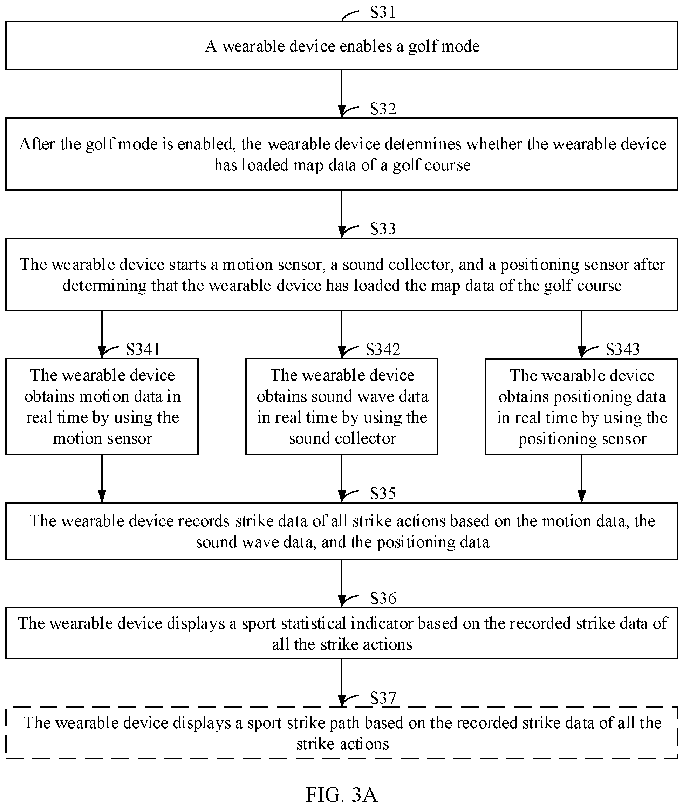

FIG. 3A is a schematic flowchart of a sport mode processing method according to an embodiment of this application. As shown in FIG. 3A, the sport mode processing method mentioned in this application may include S31 to S37.

S31: A wearable device enables a golf mode.

For a specific implementation of S31, refer to the descriptions of the embodiment of S11 shown in FIG. 2A. Details are not described herein again.

S32: After the golf mode is enabled, the wearable device determines whether the wearable device has loaded map data of a golf course.

For a specific implementation of S32, refer to the descriptions of the embodiment of S12 shown in FIG. 2A. Details are not described herein again.

S33: The wearable device starts a motion sensor, a sound collector, and a positioning sensor after determining that the wearable device has loaded the map data of the golf course.

For a specific implementation of starting the motion sensor and the positioning sensor in S33, refer to the descriptions of the embodiment of S13 shown in FIG. 2A. Details are not described herein again.

The wearable device needs to spend specific time in loading the map data of the golf course. Therefore, the wearable device may further start the sound collector when starting the motion sensor and the positioning sensor, to prevent a device from consuming large power of the wearable device due to long-time startup.

S341: The wearable device obtains motion data in real time by using the motion sensor.

For a specific implementation of S341, refer to the descriptions of the embodiment of S141 shown in FIG. 2A. Details are not described herein again.

S342: The wearable device obtains sound wave data in real time by using the sound collector.

A software interface and/or a hardware interface may be disposed between the wearable device and the sound collector, so that the wearable device can obtain sound wave data in real time through the interface. The sound collector may be disposed in the wearable device. For example, the sound collector may be fastened in the wearable device as an independent device, or the sound collector may be integrated in the wearable device as a part of the wearable device. For example, the sound collector may be a microphone.

The sound wave data may represent an action feature, for example, a field type and a swing type, of each strike action performed by a user when the user plays golf. For a specific implementation of the sound wave data, refer to the foregoing description content. Details are not described herein again.

S343: The wearable device obtains positioning data in real time by using the positioning sensor.

For a specific implementation of S343, refer to the descriptions of the embodiment of S142 in the embodiment of FIG. 2A. Details are not described herein again.

There is no time sequence between S341, S342, and S343, and S341 to S343 may be performed simultaneously or sequentially.

Therefore, the wearable device may capture motion data, sound wave data, and positioning data in real time. This helps detect, in a timely and accurate manner, each strike action performed by the user when the user plays golf.

S35: The wearable device records strike data of all strike actions based on the motion data, the sound wave data, and the positioning data.

The wearable device may monitor, in real time based on the motion data, the sound wave data, and the positioning data that are obtained in real time, an action performed by the user when the user plays golf. Therefore, the wearable device may determine each strike action, and may record strike data of each strike action.

For a specific implementation of the strike data of each strike action, refer to the descriptions of the embodiment of S15 shown in FIG. 2A. Details are not described herein again.

According to a golf rule, the user is not allowed to perform a trial swing or practice in a bunker or a green, and the user is allowed to perform a trial swing and practice in a tee, a fairway, or a hazard. Therefore, for different field types, a determining criterion for detecting, by the wearable device based on the motion data, the sound wave data, and the positioning data that are obtained in real time, whether each action performed by the user when the user plays golf is a strike action varies.

With reference to FIG. 3B-1 and FIG. 3B-2, the following describes in detail a specific implementation of recording, by the wearable device, the strike data of all the strike actions based on the motion data, the sound wave data, and the positioning data in S35.

FIG. 3B-1 and FIG. 3B-2 are a schematic flowchart of a sport mode processing method according to an embodiment of this application. As shown in FIG. 3B-1 and FIG. 3B-2, the sport mode processing method mentioned in this application may include S41 to S49.

In a case in which a user plays golf in an area in which any hole in a golf course is located:
S41 to S432 describe a specific implementation process of detecting, by a wearable device, the 1^{st} strike action in an area in which the hole is located, and recording strike data of the 1^{st} strike action.
S44 to S49 describe a specific implementation process of detecting, by the wearable device, a remaining strike action other than the 1^{st} strike action in the area in which the hole is located, and recording strike data of the remaining strike action.
S41: The wearable device obtains motion data, sound wave data, and positioning data within a time period 4.

Based on S341, S342, and S343, the wearable device may obtain motion data, sound wave data, and positioning data in real time in an entire process of playing golf by the user. Therefore, the wearable device may obtain motion data, sound wave data, and positioning data within a same time period (namely, the time period 4), to help analyze a complete action performed by the user when the user plays golf.

For a specific implementation of the time period 4, refer to the descriptions of the time period 1 in the embodiment of S21 shown in FIG. 2B-1. Details are not described herein again.

S42: The wearable device determines, based on the motion data and the sound wave data within the time period 4, whether a strike action is detected.

If a strike action is detected, the wearable device performs S431. If no strike action is detected, the wearable device performs S432.

According to a golf rule, when playing golf, the user may perform at least one of a hand-waving action, a whiff action, or a strike action. Therefore, the wearable device may determine, based on the motion data and the sound wave data within the time period 4, whether a strike action is detected. This can eliminate an action caused by misoperation, namely, hand waving or a whiff, of the user.

The wearable device may determine, in a plurality of manners, whether a strike action is detected.

In some embodiments, the wearable device captures acceleration data and angular velocity data within the time period 4 based on an acceleration sensor and a gyroscope sensor in the motion sensor respectively. The wearable device may obtain a second waveform signal feature based on the acceleration data and the angular velocity data within the time period 4. The second waveform signal feature may include but is not limited to at least one of a quantity of wave peaks, a quantity of wave troughs, a wave peak value, a wave trough value, or a difference between a wave peak value and a wave trough value.

The wearable device captures the sound wave data within the time period 4 based on a sound collector. The wearable device may obtain a first sound signal feature based on the sound wave data within the time period 4. The first sound signal feature may include at least one of a frequency, energy, or a peak value.

Therefore, the wearable device may determine a second probability based on the second waveform signal feature and the first sound signal feature, where the second probability indicates a possibility of a strike action. When the second probability is greater than a threshold 3, the wearable device may determine that a strike action is detected. When the second probability is less than or equal to the threshold 3, the wearable device may determine that no strike action is detected. A specific value of the threshold 3 is not limited in this application.

In some other embodiments, the wearable device captures acceleration data and angular velocity data within the time period 4 based on an acceleration sensor and a gyroscope sensor in the motion sensor respectively. The wearable device may determine a third waveform signal feature based on the motion data and the sound wave data within the time period 4. The third waveform signal feature may include an up-swing displacement and/or a rotational angle.

The wearable device captures the sound wave data within the time period 4 based on a sound collector. The wearable device may obtain a second sound signal feature based on the sound wave data within the time period 4. The second sound signal feature may include at least one of a frequency, energy, or a peak value.

Therefore, the wearable device may determine, based on the third waveform signal feature and the second sound signal feature, a probability 1 of a hand-waving action, a probability 2 of a whiff action, and a probability 3 of a strike action. When the probability 3 is the largest one of the probability 1, the probability 2, and the probability 3, the wearable device may determine that a strike action is detected. Otherwise, the wearable device may determine that no strike action is detected.

To sum up, the wearable device may determine, based on the motion data and the sound wave data within the time period 4, whether a strike action is detected, to eliminate abnormal scenarios such as hand waving and a whiff.

In addition, after determining that a strike action is detected, the wearable device may further analyze whether a swing type of the strike action is a full swing, a 1/2 swing, a 1/4 swing, or putting.

S431: When determining, based on the positioning data within the time period 4 and map data of the golf course, that a field type of the strike action is a tee and the strike action is the 1^{st} strike action, the wearable device records strike data of the strike action, and performs S44.

For a specific implementation process of S431, refer to the descriptions of the embodiment of S231 shown in FIG. 2B-1. Details are not described herein again.

Therefore, when it is determined that the field type of the strike action is the tee and the strike action is the 1^{st} strike action, the wearable device may record strike data of the 1^{st} strike action, and perform S44, so that the wearable device can continue to detect a remaining strike action in the area in which the hole is located and record strike data of the remaining strike action.

For a cumulative quantity of strokes for a hole to which the strike action belongs, because a current total cumulative quantity of strokes for the hole is 0, the wearable device may update, to 1, the cumulative quantity of strokes for the hole to which the strike action belongs.

For a cumulative quantity of strokes for a field to which the strike action belongs, because a current total cumulative quantity of strokes for the field is 0, the wearable device may update, to 1, the cumulative quantity of strokes for the field to which the strike action belongs.

S432: The wearable device updates the motion data, the sound wave data, and the positioning data within the time period 4 in S41, until S431 is performed.

After determining that no strike action is detected, the wearable device may continue to update the motion data, the sound wave data, and the positioning data within the time period 4 in S41, so that the wearable device captures, to a maximum extent, motion data, sound wave data, and positioning data that correspond to a complete action.

In some embodiments, the wearable device may update the motion data, the sound wave data, and the positioning data within the time period 4 in S41 to motion data, sound wave data, and positioning data within a time period 4'.

For a specific implementation of the time period 4', refer to the descriptions of the time period 1' in the embodiment of S232 shown in FIG. 2B-1. Details are not described herein again.

To sum up, the wearable device may detect the 1^{st} strike action, and may record the strike data of the 1^{st} strike action.

S44: The wearable device obtains motion data, sound wave data, and positioning data within a time period 5, where the time period 5 is different from the time period 4.

Based on S341, S342, and S343, the wearable device may obtain motion data, sound wave data, and positioning data in real time in an entire process of playing golf by the user. Therefore, the wearable device may obtain motion data, sound wave data, and positioning data within the time period 5, to help analyze a complete action performed by the user when the user plays golf.

For a specific implementation of the time period 5, refer to the descriptions of the time period 2 in the embodiment of S24 shown in FIG. 2B-1. Details are not described herein again.

S45: The wearable device determines, based on the motion data and the sound wave data within the time period 5, whether a strike action is detected.

If a strike action is detected, the wearable device performs S461 or S462. If no strike action is detected, the wearable device performs S49.

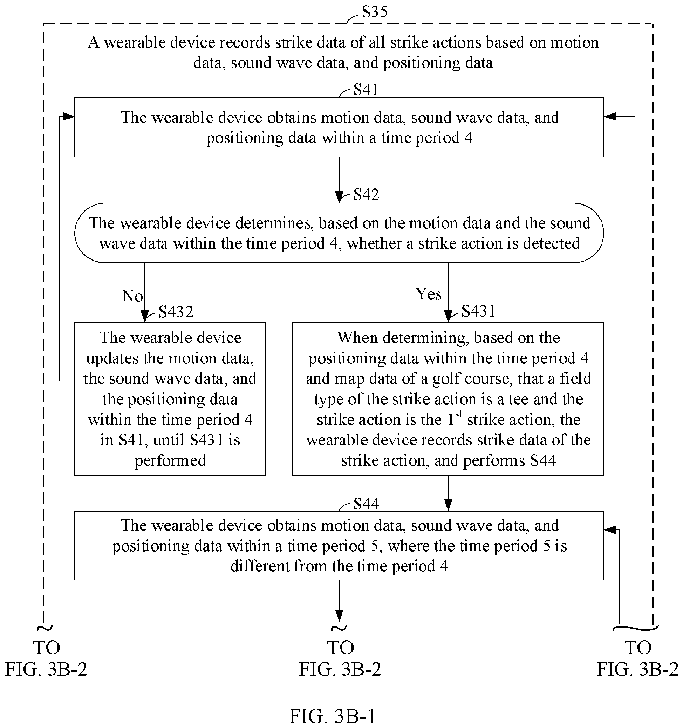

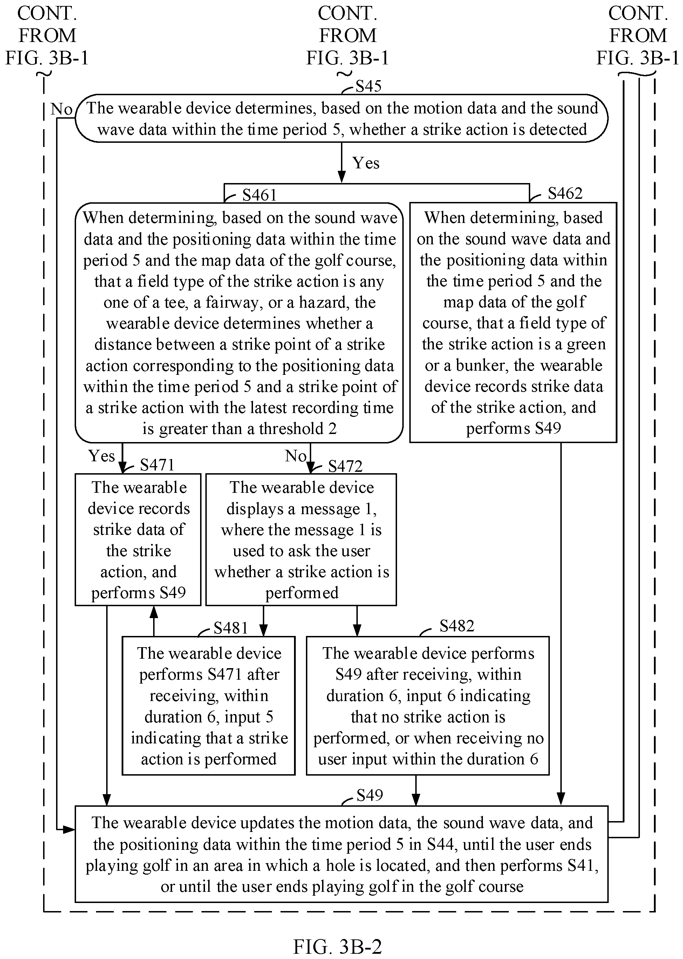

For a specific implementation process of S45, refer to the description content of the embodiment of S42 shown in FIG. 3B-1. Details are not described herein again.

S461: When determining, based on the sound wave data and the positioning data within the time period 5 and the map data of the golf course, that a field type of the strike action is any one of the tee, a fairway, or a hazard, the wearable device determines whether a distance between a strike point of a strike action corresponding to the positioning data within the time period 5 and a strike point of a strike action with the latest recording time is greater than a threshold 2.

If the distance is greater than the threshold 2, the wearable device performs S471. If the distance is not greater than the threshold 2, the wearable device performs S472.

After it is determined that a strike action is detected, because the sound wave data can represent sound features of various field types, the wearable device may preliminarily determine, based on the sound wave data within the time period 5, whether a field type of the strike action is a bunker or a green.

When determining that the field type of the strike action is the bunker or the green, the wearable device does not need to continue to determine, based on the positioning data within the time period 5 and the loaded map data of the golf course, the field type of the strike action, and may perform S471.

When determining that the field type of the strike action is not the bunker or the green, the wearable device may continue to determine the field type of the strike action based on the positioning data within the time period 5 and the loaded map data of the golf course. For a specific implementation process, refer to the descriptions of the embodiment of S261 shown in FIG. 2B-2. Details are not described herein again. In addition, the wearable device may further determine a location, in the golf course or in the area in which the hole is located, at which the strike action is performed, that is, a strike point of the strike action.

When the field type of the strike action is any one of the tee, the fairway, or the hazard, the wearable device may determine whether a distance between a strike point of the strike action and a strike point of a strike action with the latest recording time is greater than the threshold 2. Continuity of a swing performed by the user is fully considered. This avoids a phenomenon that a whiff, a trial swing, or practice performed by the user is mis-determined as a strike action.

The strike action with the latest recording time is a strike action whose recording time is closest to current time among all strike actions recorded before a current moment.

For example, it is assumed that the wearable device records the 1^{st} strike action and the 2^{nd} strike action before the current moment. In this case, after determining that a strike action is detected, the wearable device may determine that the strike action with the latest recording time is the 2^{nd} strike action.

The distance between the strike point of the strike action and the strike point of the strike action with the latest recording time represents a moving distance that occurs when the strike action acts on a golf ball, that is, a strike distance of the strike action.

A specific value of the threshold 2 is not limited in this application. For example, the threshold 2 may be set to be equal to an average distance by which the user performs one strike action.

S471: The wearable device records strike data of the strike action, and performs S49.

When the distance between the strike point of the strike action and the strike point of the strike action with the latest recording time is greater than the threshold 2, the wearable device may determine that the golf ball moves by a large distance after the user performs the strike action. Therefore, the wearable device records strike data of the strike action, and performs S49, so that the wearable device can continue to detect a remaining strike action in the area in which the hole is located and record strike data of the remaining strike action.

For a cumulative quantity of strokes for a hole to which the strike action belongs, because a current total cumulative quantity of strokes for the hole is N, the wearable device may update, to N+1, the cumulative quantity of strokes for the hole to which the strike action belongs. N herein is a positive integer.

For a cumulative quantity of strokes for a field to which the strike action belongs, because a current total cumulative quantity of strokes for the field is M, the wearable device may update, to M+1, the cumulative quantity of strokes for the field to which the strike action belongs. M herein is a positive integer.

S472: The wearable device displays a message 1, where the message 1 is used to ask the user whether a strike action is performed.

For a specific implementation process of S472, refer to the descriptions of the embodiment of S272 shown in FIG. 2B-2. Details are not described herein again.

S481: The wearable device performs S471 after receiving, within duration 6, input 5 indicating that a strike action is performed.

S482: The wearable device performs S49 after receiving, within the duration 6, input 6 indicating that no strike action is performed, or when receiving no user input within the duration 6.

For a specific implementation of the duration 6, refer to the descriptions of the duration 3 in the embodiments of S281 and S282 shown in FIG. 2B-2. For a specific implementation process of S481, refer to the descriptions of the embodiment of S281 shown in FIG. 2B-2. For a specific implementation process of S482, refer to the descriptions of the embodiment of S282 shown in FIG. 2B-2. Details are not described herein again.

To sum up, the wearable device eliminates, based on user input, an action that may be a whiff, a trial swing, or practice, and determines that a strike action is detected.

S462: When determining, based on the sound wave data and the positioning data within the time period 5 and the map data of the golf course, that a field type of the strike action is the green or the bunker, the wearable device records strike data of the strike action, and performs S49.

Based on the descriptions of the embodiment of S461, when the field type of the strike action is the green or the bunker, the wearable device may record the strike data of the strike action, and perform S49, so that the wearable device can continue to detect a remaining strike action in the area in which the hole is located and record strike data of the remaining strike action.

S49: The wearable device updates the motion data, the sound wave data, and the positioning data within the time period 5 in S44, until the user ends playing golf in the area in which the hole is located, and then performs S41, or until the user ends playing golf in the golf course.

After determining that no strike action is detected, the wearable device may update the motion data, the sound wave data, and the positioning data within the time period 5 in S44, so that the wearable device captures, to a maximum extent, motion data, sound wave data, and positioning data that correspond to a complete action.

In some embodiments, the wearable device may update the motion data, the sound wave data, and the positioning data within the time period 5 in S44 to motion data, sound wave data, and positioning data within a time period 5'.

For a specific implementation of the time period 5', refer to the descriptions of the time period 2' in the embodiment of S29 shown in FIG. 2B-2. Details are not described herein again.

Therefore, when it is determined that the user ends playing golf in the area in which the hole is located, the wearable device does not need to continue to update the motion data, the sound wave data, and the positioning data within the time period 5 in S44, and may perform S41, so that the wearable device can continue to detect all strike actions in an area in which another hole in the golf course is located, and record corresponding strike data of all the strike actions, until it is determined that the user ends playing golf in the golf course. Then the wearable device may turn off the motion sensor, the sound collector, and the positioning sensor, and disable the golf mode, to end strike action detection performed when the user plays golf.

Based on the descriptions of the foregoing embodiment, in a process in which the user plays golf in a golf course, the wearable device may determine, based on motion data and positioning data within a same time period, whether a strike action is detected. This eliminates a false action caused by arm swinging or a whiff performed by the user. After the wearable device determines that a strike action is detected, when a field type of the strike action is any one of a tee, a fairway, or a hazard, the wearable device may selectively record strike data of the strike action based on a moving distance that occurs when the strike action acts on a golf ball. This eliminates an action that occurs in an abnormal scenario, for example, a whiff, a trial swing, or practice. When a field type of the strike action is a green or a bunker, the wearable device may directly record strike data of the strike action according to a golf rule. Therefore, the wearable device may record strike data of all strike actions performed by the user when the user plays golf in a golf course.

In addition, after determining that a strike action is detected, the wearable device may further display strike data of the strike action in real time.

When any strike action is detected, the wearable device may further perform the content of the embodiment of S29 shown in FIG. 2B-2. Details are not described herein again.

S36: The wearable device displays a sport statistical indicator based on the recorded strike data of all the strike actions.

For a specific implementation of S36, refer to the descriptions of the embodiment of S16 in the embodiment of FIG. 2A. Details are not described herein again.

S37: The wearable device displays a sport strike path based on the recorded strike data of all the strike actions.

It should be noted that S37 is optional.

For a specific implementation of S37, refer to the descriptions of the embodiment of S17 in the embodiment of FIG. 2A. Details are not described herein again.

Based on the descriptions of the embodiments of FIG. 3A, FIG. 3B-1, and FIG. 3B-2, fully considering influencing factors such as the golf rule, the field type of the golf course, and a sport feature of golf, the wearable device may detect, in real time, each strike action performed by the user when the user plays golf, and may record strike data of all strike actions, to accurately display a sport statistical indicator. This helps the user learn of a swing habit of the user, a golf ball landing location, stability of performance of the user, and the like in a timely manner, and further helps the user comprehensively evaluate a weak point of the user and formulate a scientific training plan.

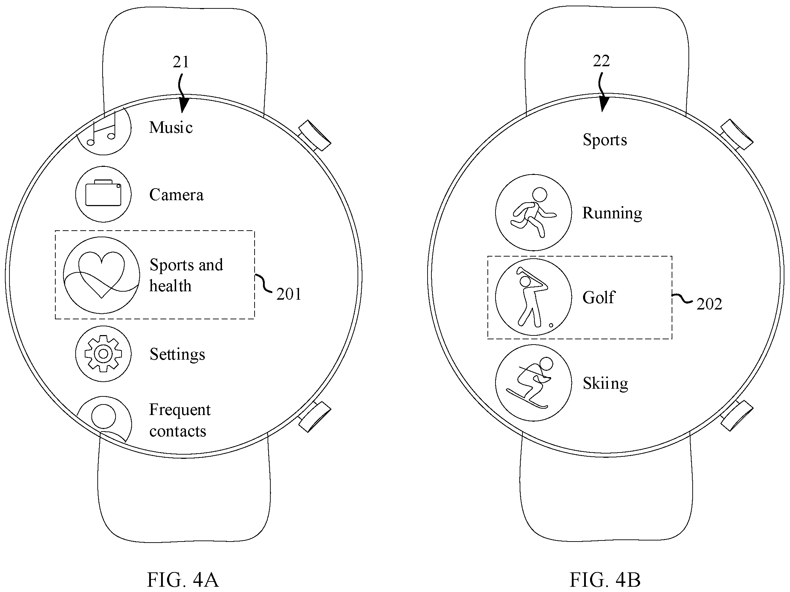

Based on the descriptions of the foregoing embodiments, with reference to FIG. 4A to FIG. 4Z, a specific implementation process of implementing a sport mode processing method by a wearable device after a user plays golf is described in detail below by using an example in which the user carries the wearable device and plays golf in a golf course. For ease of description, in FIG. 4A to FIG. 4Z, an example in which the wearable device is the watch in FIG. 1 is used for illustration.

FIG. 4A to FIG. 4Z are schematic diagrams of human-computer interaction interfaces according to an embodiment of this application.
1: The watch enables a golf mode.

The watch may display a user interface 21 shown in FIG. 4A as an example. The user interface 21 may be a home screen (home screen) of the watch. The user interface 21 may include but is not limited to a status bar, a navigation bar, a calendar indicator, a weather indicator, a time indicator, a battery level indicator, a plurality of application icons, and the like. The application icons may further include an icon 201 of a sports and health application, or may include, for example, an icon of a music application, an icon of a camera application, an icon of a settings application, an icon of a map application, or an icon of a frequent contacts application.

After detecting an operation, indicated by the user, of starting the sports and health application (for example, the user taps the icon 201 of the sports and health application on the user interface 21 shown in FIG. 4A), the watch may display a user interface 22 shown in FIG. 4B as an example. The user interface 22 is used to display a page of the sport and health application.

In FIG. 4B, the user interface 22 may include but is not limited to a golf icon 202, a running icon, a skiing icon, a walking icon, and the like. The golf icon 202 is used to enable the golf mode. In addition, the user interface 22 may further include a control for adding a new motion, and the like.

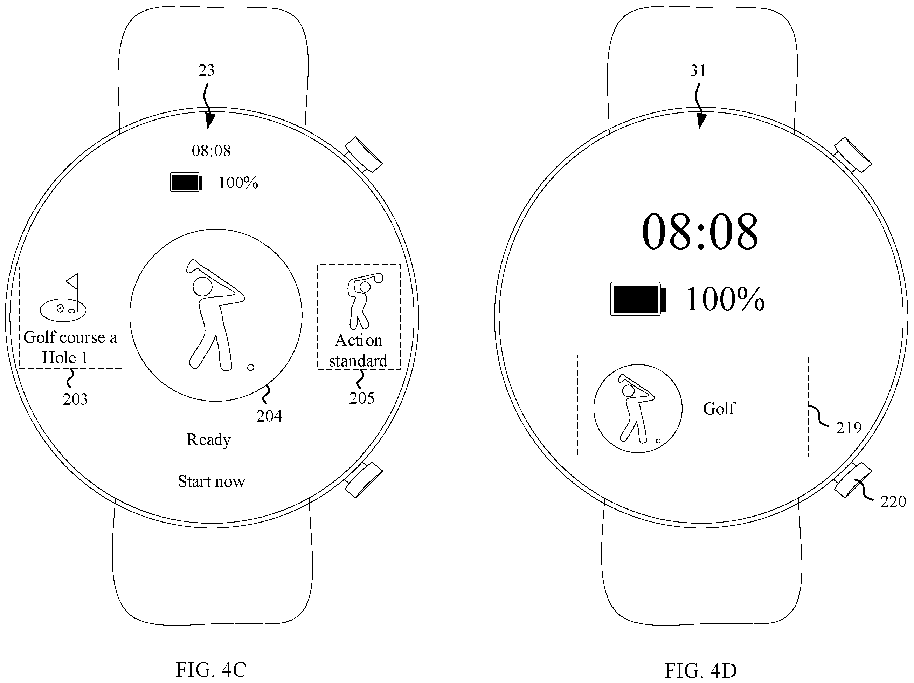

After detecting an operation, indicated by the user, of enabling the golf mode (for example, the user taps the golf icon 202 on the user interface 22 shown in FIG. 4B), the watch may enable the golf mode, and may display a user interface 23 shown in FIG. 4C as an example. The user interface 23 is a golf interface displayed after the golf mode is enabled.

The operation of tapping the golf icon 202 on the user interface 22 may be a feasible implementation of the input 1 or the operation 1.

In addition, after detecting an operation, indicated by the user, of disabling the golf mode (for example, the user slides to the right on the user interface 23 shown in FIG. 4C), the watch may disable the golf mode, and may display the user interface 22 shown in FIG. 4B as an example.

The operation of sliding to the right on the user interface 23 may be a feasible implementation of the input 3.

It should be noted that, in addition to the manners of enabling the golf mode in FIG. 4A to FIG. 4C, the watch may display a user interface 31 shown in FIG. 4D as an example. The user interface 31 may be a lock screen page of the watch. The user interface 31 may include but is not limited to a time indicator, a battery level indicator, a plurality of application icons, and the like. The application icons may further include a golf icon 219 in a sports and health application, or may include, for example, an icon of a music application, an icon of a camera application, an icon of a settings application, an icon of a map application, or an icon of a frequent contacts application.

After detecting an operation, indicated by the user, of enabling the golf mode (for example, the user taps the golf icon 219 in the sports and health application on the user interface 31 shown in FIG. 4D), the watch may enable the golf mode, and may display the user interface 23 shown in FIG. 4C as an example.

The operation of tapping the golf icon 219 in the sports and health application on the user interface 31 may be a feasible implementation of the input 1 or the operation 1.

Alternatively, the watch may include a button 220 on the user interface 31 shown in FIG. 4D. After detecting an operation, indicated by the user, of enabling the golf mode (for example, the user double-taps the button 220), the watch may enable the golf mode, and may display the user interface 23 shown in FIG. 4C as an example.

The operation of double-tapping the button 220 may be a feasible implementation of the input 1 or the operation 1.

Alternatively, the watch may include a button 220 on the user interface 31 shown in FIG. 4D. After detecting an operation, indicated by the user, of enabling the golf mode (for example, the user double-taps the button 220 and then inputs speech "Enable the golf mode"), the watch may enable the golf mode, and may display the user interface 23 shown in FIG. 4C as an example.

The operation of double-tapping the button 220 and then inputting the speech "Enable the golf mode" may be a feasible implementation of the input 1 or the speech 1.

Alternatively, after detecting an operation, indicated by the user, of enabling the golf mode (for example, the user rotates a dial of the watch), the watch may enable the golf mode, and may display the user interface 23 shown in FIG. 4C as an example.

The operation of rotating the dial of the watch may be a feasible implementation of the input 1 or the operation 1.

To sum up, the watch may enable the golf mode.

In addition, when enabling the golf mode, the watch may vibrate to notify the user that the golf mode is enabled. Alternatively, the watch may display a message indicating that the golf mode is enabled.

2: After the golf mode is enabled, the watch determines whether the watch has loaded map data of a golf course a, and starts a motion sensor, a sound collector, and a positioning sensor after determining that the watch has loaded the map data of the golf course a.

In FIG. 4C, the user interface 23 may include a control 203 and a control 204.

The control 203 is used to display an identifier of a golf course obtained by the watch through positioning or an identifier of a golf course selected by the user. The control 203 is further used to provide an entry for viewing a golf course recommended by the watch. The control 203 is further used to provide an entry for reselecting a golf course. The control 204 is used to provide an entry for determining a golf course. In addition, the user interface 23 may further include a control 205. The control 205 is used to provide an entry to an action standard of golf.

21: The user views a golf course recommended by the watch, or the user reselects a golf course.

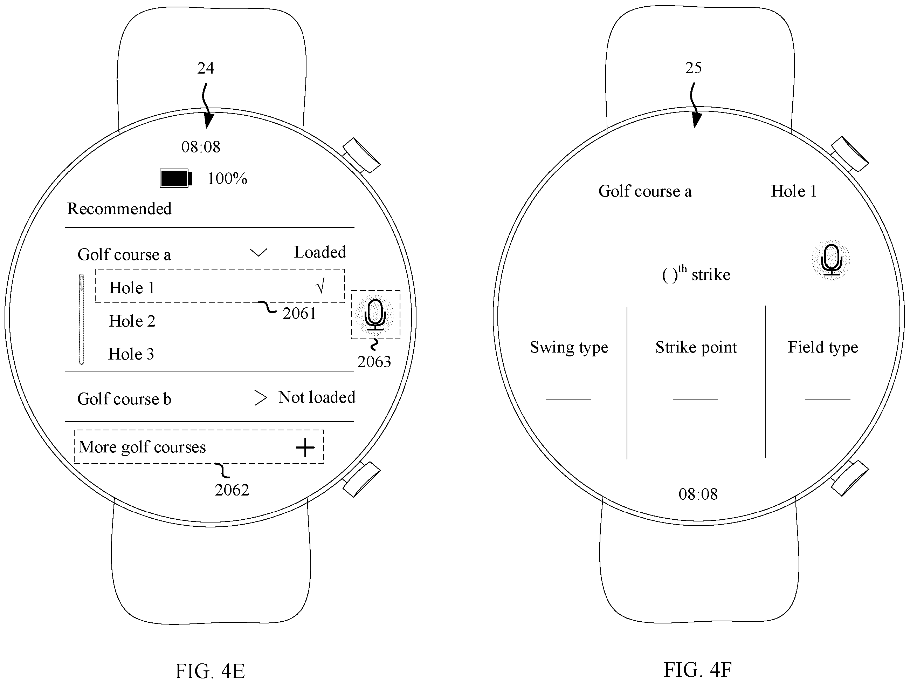

After detecting an operation, indicated by the user, of viewing a golf course recommended by the watch or reselecting a golf course (for example, the user taps the control 203 on the user interface 23 shown in FIG. 4C), the watch may display a user interface 24 shown in FIG. 4E as an example. The user interface 24 is used to display identifiers of golf courses recommended by the watch. In addition, the user interface 24 is further used to display a loading status, for example, having been loaded or having not been loaded, of map data of each golf course. In addition, the user interface 24 is further used to provide an entry for searching for another golf course.

In FIG. 4E, the user interface 24 may include a control 2061. The control 2061 is used to provide an entry for selecting a hole 1 in the golf course a. In addition, the user interface 24 may further include a control 2062 and a control 2063. The control 2062 is used to provide an entry for searching for another golf course based on text input. The control 2063 is used to provide an entry for searching for another golf course based on speech input.

After detecting an operation, indicated by the user, of selecting the hole 1 in the golf course a (for example, the user taps the control 2061 or slides to the right on the user interface 24 shown in FIG. 4E), the watch may determine that the user has selected the hole 1 in the golf course a.

Therefore, the watch may determine whether the watch has loaded the map data of the golf course a.

After determining that the watch has loaded the map data of the golf course a, the watch may switch from displaying the user interface 24 shown in FIG. 4E to displaying the user interface 23 shown in FIG. 4C.

After determining that the watch has not loaded the map data of the golf course a, the watch may load the map data of the golf course a through a server or a watch that is communicatively connected to the watch.

When loading the map data of the golf course a, the watch may further display, on the user interface 24 shown in FIG. 4E, a loading progress of loading the map data of the golf course a by the watch.

In addition, after the loading of the map data of the golf course a is completed, the watch may update the loading status of the map data of the golf course a or a prompt on the user interface 24 shown in FIG. 4E.

In addition, after detecting an operation, indicated by the user, of selecting a golf course b (for example, the user taps text "Golf course b" on the user interface 24 shown in FIG. 4E), the watch may determine that the user has selected the golf course b. Therefore, the watch may determine whether the watch has loaded map data of the golf course b. For a specific implementation process, refer to the foregoing descriptions of determining and identifying, by the watch, whether the map data of the golf course a has been loaded. Details are not described herein again.

In addition, after detecting an operation, indicated by the user, of selecting a golf course c (for example, the user taps the control 2062 on the user interface 24 shown in FIG. 4E, enters text "Golf course c", and then taps the text "Golf course c"), the watch may determine that the user has selected the golf course c. Therefore, the watch may determine whether the watch has loaded map data of the golf course c. For a specific implementation process, refer to the foregoing descriptions of determining and identifying, by the watch, whether the map data of the golf course a has been loaded. Details are not described herein again.

In addition, after detecting an operation, indicated by the user, of selecting the golf course c (for example, the user taps the control 2063 on the user interface 24 shown in FIG. 4E, inputs speech "Golf course c", and then taps recognized text "Golf course c"), the watch may determine that the user has selected the golf course c. Therefore, the watch may determine whether the watch has loaded map data of the golf course c. For a specific implementation process, refer to the foregoing descriptions of determining and identifying, by the watch, whether the map data of the golf course a has been loaded. Details are not described herein again.

For ease of description, in this application, an example in which the user selects the hole 1 in the golf course a is used for illustration.

Therefore, after determining that the watch has loaded the map data of the golf course a, the watch may switch from displaying the user interface 24 shown in FIG. 4E to displaying the user interface 23 shown in FIG. 4C. In this case, an identifier of the golf course a is displayed on the user interface 23 (if it is determined that the golf course b is selected, an identifier of the golf course b is displayed on the control 203 on the user interface 23; or if it is determined that the golf course c is selected, an identifier of the golf course c is displayed on the control 203 on the user interface 23).

After detecting an operation, indicated by the user, of confirming the golf course a (for example, the user taps the control 204 on the user interface 23 shown in FIG. 4C), the watch may start the motion sensor, the sound collector, and the positioning sensor.

In addition, the watch may switch from displaying the user interface 23 shown in FIG. 4C to displaying a user interface 25 shown in FIG. 4F. The user interface 25 is used to display strike data of each strike action performed when the user plays golf. In addition, an initial state of the user interface 25 indicates that the watch has not detected a strike action.

It should be noted that this application is not limited to a display style of the user interface 25.

22: The user determines that the golf course obtained by the watch through positioning is the golf course a in which the user plays golf.

After detecting an operation, indicated by the user, of confirming the hole 1 in the golf course a (for example, the user taps the control 204 on the user interface 23 shown in FIG. 4C), the watch may determine that the user has selected the hole 1 in the golf course a, and determine whether the map data of the golf course a has been loaded.

After determining that the watch has not loaded the map data of the golf course a, the watch may load the map data of the golf course a through a server or a watch that is communicatively connected to the watch.

When loading the map data of the golf course a, the watch may further display, on the user interface 23 shown in FIG. 4C, a loading progress of loading the map data of the golf course a by the watch.

After determining that the watch has loaded the map data of the golf course a, the watch may start the motion sensor, the sound collector, and the positioning sensor, and may switch from displaying the user interface 23 shown in FIG. 4C to displaying the user interface 25 shown in FIG. 4F.

31: The watch obtains motion data in real time by using the motion sensor.

After the motion sensor is started, the watch may obtain motion data in real time.

32: The watch obtains sound wave data in real time by using the sound collector.

After the sound collector is started, the watch may obtain sound wave data in real time.

33: The watch obtains positioning data in real time by using the positioning sensor.

After the positioning sensor is started, the watch may obtain positioning data in real time.

4: The watch records strike data of all strike actions based on the motion data, the sound wave data, and the positioning data.

For the hole 1 in the golf course a, the watch may detect, in real time, each strike action in an area in which the hole 1 is located, and may record strike data of all strike actions in the area in which the hole 1 is located.

### 41: 1^{st} strike action for the hole 1

In the area in which the hole 1 in the golf course a is located, the user swings a golf club to play golf. In this case, based on the embodiments of FIG. 2A, FIG. 2B-1, FIG. 2B-2, FIG. 3A, FIG. 3B-1, and FIG. 3B-2, the watch may perform the following process:
The watch determines, based on obtained motion data that is within a time period, whether a strike action is detected, or determines, based on obtained motion data and sound wave data that are within same duration, whether a strike action is detected, to be specific, detects whether an action performed by the user when the user plays golf is a strike action.

After determining that the watch detects a strike action, the watch may determine, based on obtained positioning data that is within a same time period as that of the motion data, whether a field type of the strike action is a tee.

When determining that the field type of the strike action is the tee and no strike data of a strike action in the area in which the hole 1 is located is recorded, the watch may determine that the strike action is the 1^{st} strike action for the hole 1, and may record strike data of the 1^{st} strike action.

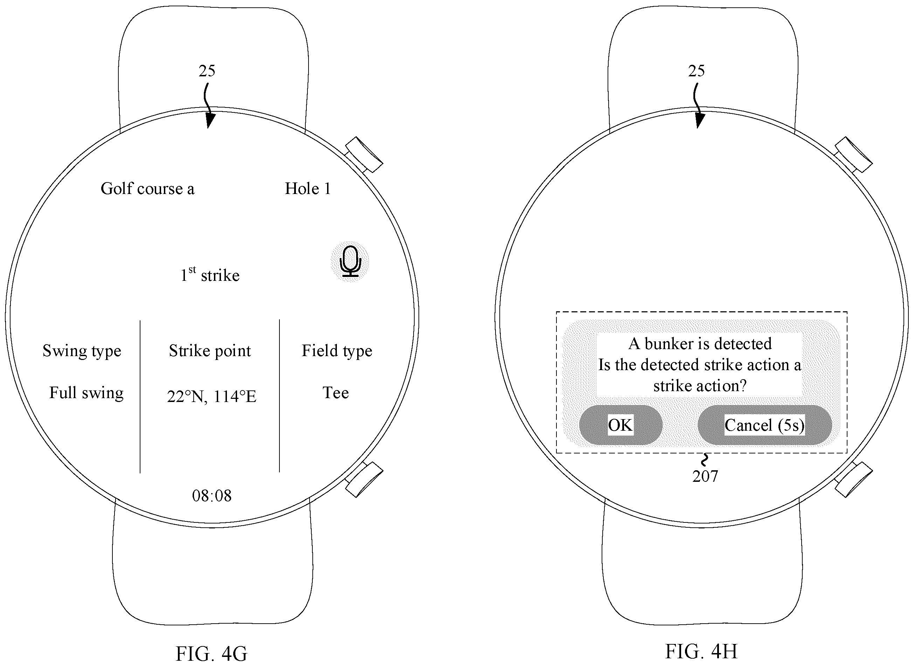

In addition, the watch may switch from displaying the user interface 25 shown in FIG. 4F to displaying a user interface 25 shown in FIG. 4G. In this case, the user interface 25 is used to display the strike data of the 1^{st} strike action in real time.

### 42: 2^{nd} strike action for the hole 1

In the area in which the hole 1 in the golf course a is located, the user continues to swing the golf club to play golf. In this case, based on the embodiments of FIG. 2A, FIG. 2B-1, FIG. 2B-2, FIG. 3A, FIG. 3B-1, and FIG. 3B-2, the watch may perform the following process:
The watch determines, based on obtained motion data that is within a time period, whether a strike action is detected, or determines, based on obtained motion data and sound wave data that are within a same time period, whether a strike action is detected.

After determining that a strike action is detected, the watch may determine a field type of the strike action based on obtained positioning data that belongs to a same time period as that of the motion data.

When determining that the field type of the strike action is a bunker, the watch may display, on the user interface 25 shown in FIG. 4G, a window 207 shown in FIG. 4H as an example. The window 207 is used to notify the user that the user has entered the bunker, and ask the user whether the detected strike action is a strike action.

In addition, the window 207 is further used to provide an entry for skipping displaying the window 207 after specific duration (for example, 5s) elapses, so that the user can focus on golf without being disturbed by the window 207.

In addition, the window 207 is further used to provide an entry for skipping displaying the window 207 after the bunker is detected again, so that the user can focus on golf without being disturbed by the window 207 later. Usually, the watch may display the window 207 after detecting, for the first time, that a field type of a strike action is the bunker. In addition, the watch may continue to display the window 207 after determining that the user has not chosen to skip displaying the window 207 and detecting again that a field type of a strike action is the bunker.

The representation form of the window 207 may be a feasible implementation of the message 3.

After detecting an operation, indicated by the user, of confirming that the detected strike action is a strike action (for example, the user taps a control with text "OK" in the window 207 shown in FIG. 4H, or no user input is received within 5s), the watch may determine that the strike action is the 2^{nd} strike action for the hole 1, and may record strike data of the 2^{nd} strike action.

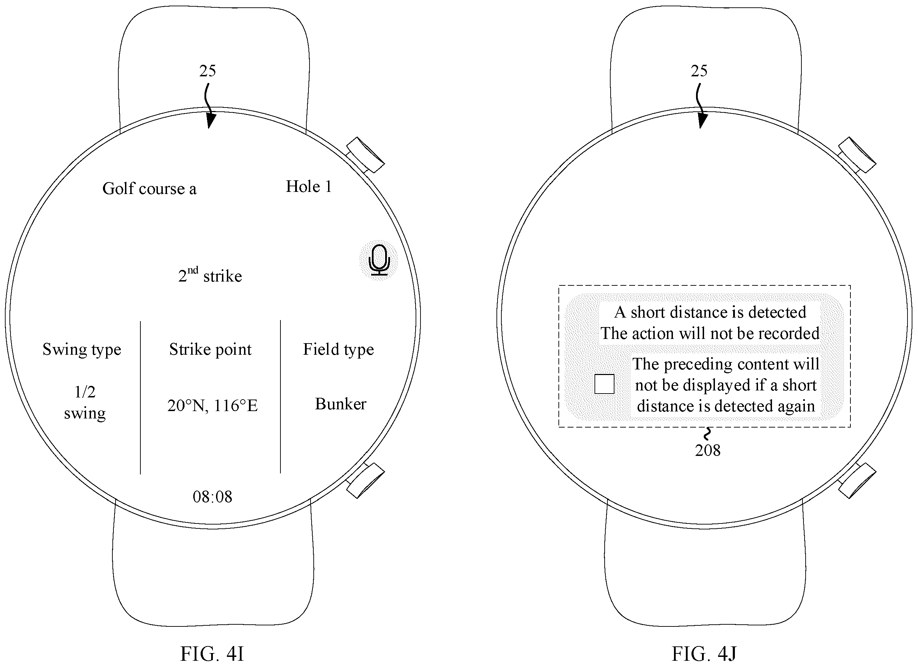

In addition, the watch may switch from displaying a user interface 25 shown in FIG. 4H to displaying a user interface 25 shown in FIG. 4I. In this case, the user interface 25 is used to display the strike data of the 2^{nd} strike action in real time.

Alternatively, after detecting an operation, indicated by the user, of confirming that the detected strike motion is not a strike action (for example, the user taps a control with text "Cancel" in the window 207 shown in FIG. 4H), the watch may determine that no strike action is detected, and may continue to display the user interface 25 shown in FIG. 4G.

### 43: 3^{rd} strike action for the hole 1

In the area in which the hole 1 in the golf course a is located, the user continues to swing the golf club to play golf. In this case, based on the embodiments of FIG. 2A, FIG. 2B-1, FIG. 2B-2, FIG. 3A, FIG. 3B-1, and FIG. 3B-2, the watch may perform the following process:
The watch determines, based on obtained motion data that is within a time period, whether a strike action is detected, or determines, based on obtained motion data and sound wave data that are within a same time period, whether a strike action is detected.

After determining that a strike action is detected, the watch may determine a field type of the strike action based on obtained positioning data that belongs to a same time period as that of the motion data.

When determining that the field type of the strike action is a fairway, the watch may determine whether a distance between a strike point of the strike action and a strike point of the 2^{nd} strike action is greater than a threshold (for example, the foregoing threshold 1 or threshold 2).

When the distance is less than or equal to the threshold, the watch may preliminarily determine that the strike action is a whiff action, a trial swing action, or a practice action. For ease of description, an example in which the watch determines that the strike action is a whiff action is used herein for illustration.

In some embodiments, the watch may display, on the user interface 25 shown in FIG. 4I, a window 208 shown in FIG. 4J as an example. The window 208 is used to notify the user that a strike distance of the strike action is close and that strike data of the strike action is not to be recorded.

In addition, the window 208 is further used to provide an entry for skipping displaying the window 208 after it is detected again that a strike distance is close, so that the user can focus on golf without being disturbed by the window 208. Usually, the watch may display the window 208 after detecting, for the first time, that a strike distance is close. In addition, the watch may continue to display the window 208 after determining that the user has not chosen to skip displaying the window 208 and detecting again that a strike distance is close.

The representation form of the window 208 may be a feasible implementation of the message 1.

Therefore, after specific duration (for example, 5s) elapses or after an operation of choosing, by the user, to skip displaying the window 208 is received, the watch may continue to display the user interface 25 shown in FIG. 4I.

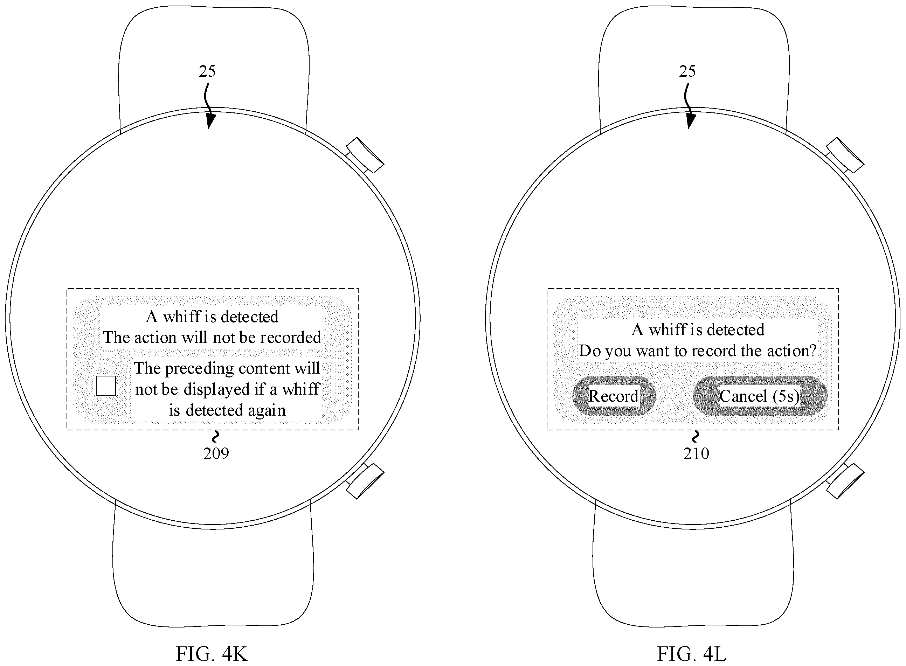

In some other embodiments, the watch may display, on the user interface 25 shown in FIG. 4I, a window 209 shown in FIG. 4K as an example. The window 209 is used to notify the user that the strike action is a whiff action and that strike data of the strike action is not to be recorded.

In addition, the window 209 is further used to provide an entry for skipping displaying the window 209 after a whiff action is detected again, so that the user can focus on golf without being disturbed by the window 209. Usually, the watch may display the window 209 after detecting a whiff action for the first time. In addition, the watch may continue to display the window 209 after determining that the user has not chosen to skip displaying the window 209 and detecting a whiff action again.

The representation form of the window 209 may be another feasible implementation of the message 1.

Therefore, after specific duration (for example, 5s) elapses or after an operation of choosing, by the user, to skip displaying the window 209 is received, the watch may continue to display the user interface 25 shown in FIG. 4I.

In some other embodiments, the watch may display, on the user interface 25 shown in FIG. 4I, a window 210 shown in FIG. 4L as an example. The window 210 is used to notify the user that the strike action is a whiff action, and ask the user whether to record strike data of the strike action.

In addition, the window 210 is further used to provide an entry for skipping displaying the window 210 after specific duration (for example, 5s) elapses, so that the user can focus on golf without being disturbed by the window 210.

The representation form of the window 210 may be another feasible implementation of the message 1.

After detecting an operation, indicated by the user, of recording the strike data of the strike action (for example, a control with text "Record" in the window 210 shown in FIG. 4L is tapped), the watch may determine that the strike action is not a whiff action, may determine that the strike action is the 3^{rd} strike action for the hole 1, and may record strike data of the 3^{rd} strike action.

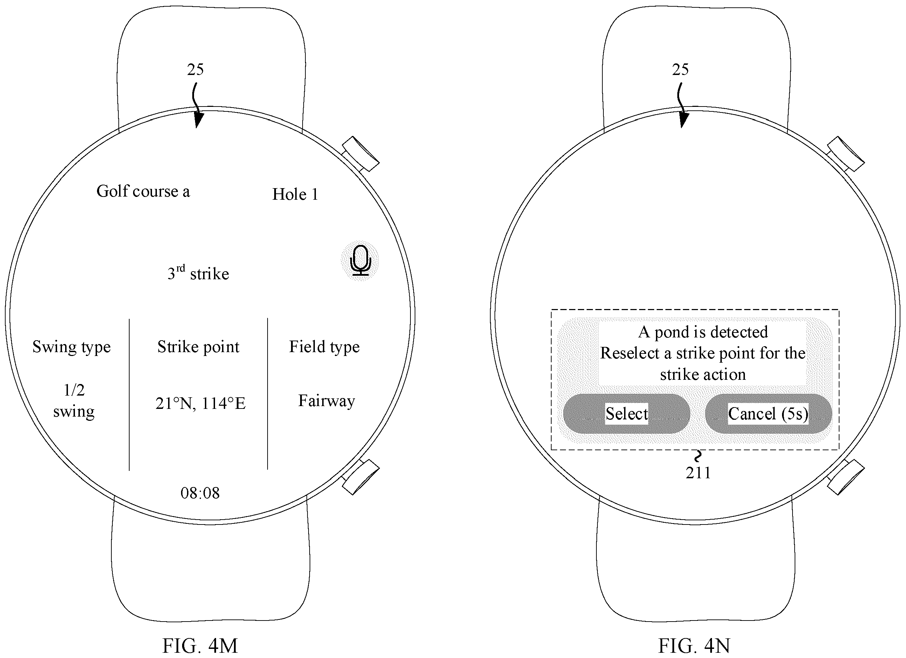

In addition, the watch may further switch from a user interface 25 shown in FIG. 4L to a user interface 25 shown in FIG. 4M as an example. In this case, the user interface 25 is used to display the strike data of the 3^{rd} strike action in real time.

Alternatively, after detecting an operation, indicated by the user, of skipping recording the strike data of the strike action (for example, a control with text "Cancel" in the window 210 shown in FIG. 4L is tapped, or no user input is received within 5s), the watch may determine that the strike action is a whiff action, does not record the strike data of the strike action, and may continue to display the user interface 25 shown in FIG. 4I.

When the distance is greater than the threshold, the watch may determine that a strike action is detected. Therefore, the watch may determine that the strike action is the 3^{rd} strike action for the hole 1, and may record strike data of the 3^{rd} strike action.

In addition, the watch may switch from the user interface 25 shown in FIG. 4I to the user interface 25 shown in FIG. 4M as an example. In this case, the user interface 25 is used to display the strike data of the 3^{rd} strike action in real time.

### 44: 4^{th} strike action for the hole 1

In the area in which the hole 1 in the golf course a is located, the user continues to swing the golf club to play golf. In this case, based on the embodiments of FIG. 2A, FIG. 2B-1, FIG. 2B-2, FIG. 3A, FIG. 3B-1, and FIG. 3B-2, the watch may perform the following process:
The watch determines, based on obtained motion data that is within a time period, whether a strike action is detected, or determines, based on obtained motion data and sound wave data that are within a same time period, whether a strike action is detected.

After determining that a strike action is detected, the watch may determine a field type of the strike action based on obtained positioning data that belongs to a same time period as that of the motion data.

When determining that the field type of the strike action is a hazard in which a pond is located, the watch may display, on the user interface 25 shown in FIG. 4M, a window 211 shown in FIG. 4N as an example. The window 211 is used to notify the user that the user has entered the pond, and notify the user that a strike point of the strike action is detected, so that the user can select a correct strike point for the strike action in a timely manner, and the watch can correct the strike point of the strike action in a timely manner.

In addition, the window 211 is further used to provide an entry for skipping displaying the window 211 after specific duration (for example, 5s) elapses, so that the user can focus on golf without being disturbed by the window 211.

The representation form of the window 211 may be a feasible implementation of the message 4.

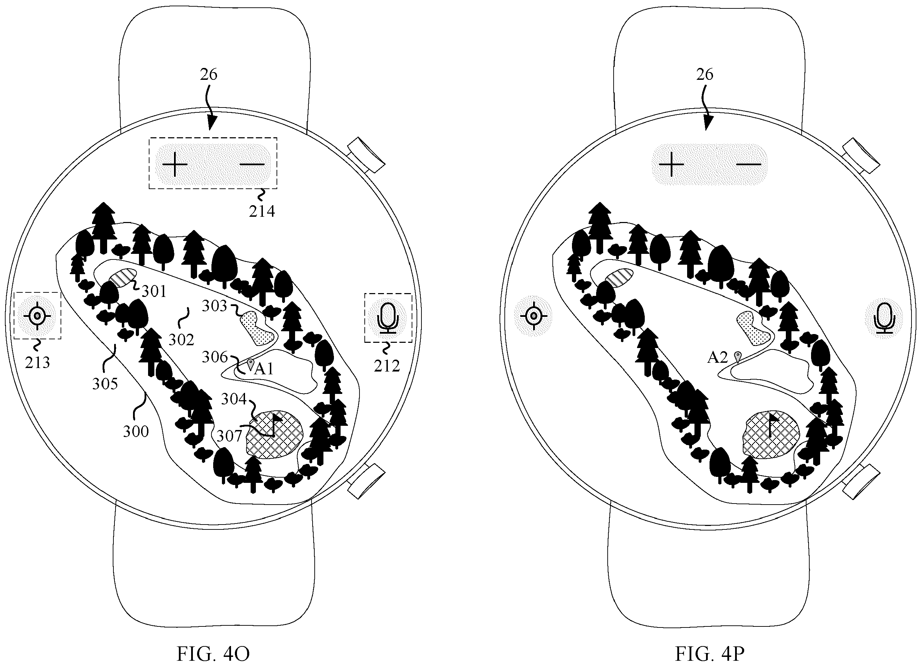

After detecting an operation, indicated by the user, of selecting a strike point for the strike action (for example, a control with text "Select" in the window 211 shown in FIG. 4N is tapped), the watch may display a user interface 26 shown in FIG. 4O as an example. The user interface 26 is used to display the area 300 in which the hole 1 in the golf course a is located.

In addition, the user interface 26 is further used to zoom in or zoom out the area 300 in which the hole 1 in the golf course a is located, obtain a current location of the watch through positioning, provide an entry for performing searching, based on speech input, in the area 300 in which the hole 1 in the golf course a is located, and the like.

In FIG. 4O, the user interface 26 may include the area 300 in which the hole 1 in the golf course a is located. In addition, the user interface 26 may further include a control 212, a control 213, and a control 214. The control 212 is used to provide an entry for performing searching, based on speech input, in the area 300 in which the hole 1 in the golf course a is located. The control 213 is used to obtain a current location of the watch through positioning. The control 214 is used to zoom in or zoom out the area 300 in which the hole 1 in the golf course a is located.

The area 300 in which the hole 1 in the golf course a is located may include a tee 301, a fairway 302, a bunker 303, a green 304, a hazard 305 in which trees are located, a hazard 306 in which a pond is located, the hole-1 307, and the like. The foregoing fairway 302 is a field, between the tee 301 and the hole-1 307, in which the user can play golf.

In FIG. 4O, the user interface 26 may further include a location A1. The location A1 indicates a strike point of the strike action.

According to a golf rule, the user is not allowed to perform a swing in the hazard in which the pond is located. Therefore, after detecting an operation, indicated by the user, of selecting a strike point by the user for the strike action (for example, the location A1 on the user interface 26 shown in FIG. 4O is moved), the watch may display a user interface 26 shown in FIG. 4P as an example. The user interface 26 may include a location A2. The location A2 indicates a strike point, selected by the user, of the strike action.

After detecting an operation, indicated by the user, of re-determining that the strike point of the strike action is the location A2 (for example, a control for confirming the location A2 on the user interface 26 shown in FIG. 4P is tapped), the watch may determine that the strike action is the 4^{th} strike action for the hole 1, and may record strike data of the 4^{th} strike action.

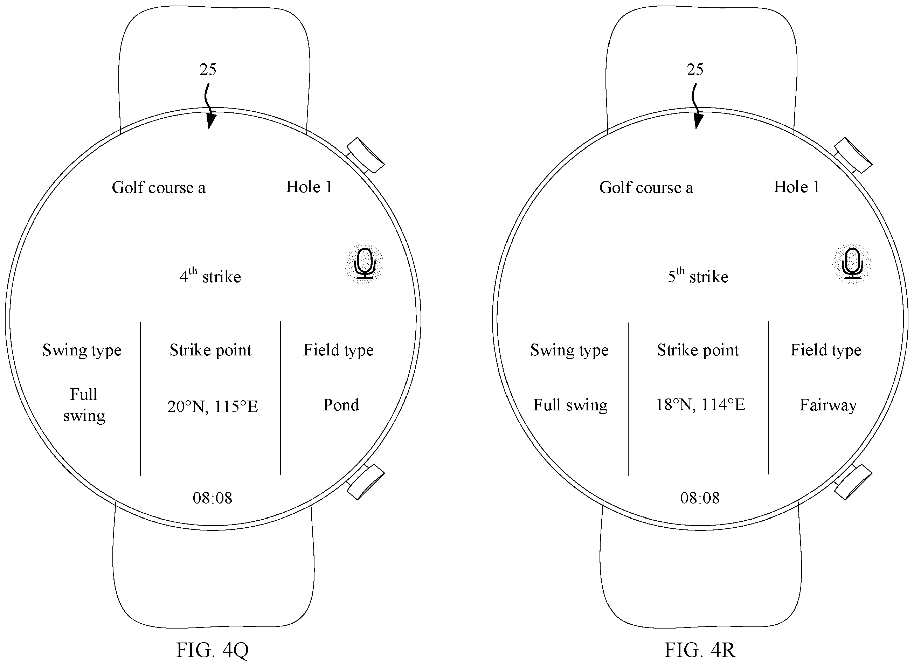

In addition, the watch may display a user interface 25 shown in FIG. 4Q as an example. In this case, the user interface 25 is used to display the strike data of the 4^{th} strike action in real time.

It should be noted that, in this application, the control for confirming the location A2 on the user interface 26 shown in FIG. 4P is not shown. The foregoing control may be displayed in a form of a window, a message, or the like. This is not limited in this application.

In addition, after detecting an operation, indicated by the user, of selecting a strike point for the strike action (for example, the control with the text "Select" in the window 211 shown in FIG. 4N is tapped), the watch may alternatively display the user interface 26 shown in FIG. 4P as an example. This depends on precision of the positioning sensor used by the watch.

Alternatively, after detecting an operation, indicated by the user, of skipping selecting a strike point for the strike action (for example, a control with text "Cancel" in the window 211 shown in FIG. 4N is tapped, or no user input is received within 5s), the watch may determine that the strike action is the 4^{th} strike action for the hole 1, and may record strike data of the 4^{th} strike action.

Therefore, the watch may display the user interface 25 shown in FIG. 4Q as an example. In this case, the user interface 25 is used to display the strike data of the 4^{th} strike action in real time.

### 45: 5^{th} strike action for the hole 1

In the area in which the hole 1 in the golf course a is located, the user continues to swing the golf club to play golf. In this case, based on the embodiments of FIG. 2A, FIG. 2B-1, FIG. 2B-2, FIG. 3A, FIG. 3B-1, and FIG. 3B-2, the watch may perform the following process:
The watch determines, based on obtained motion data that is within a time period, whether a strike action is detected, or determines, based on obtained motion data and sound wave data that are within a same time period, whether a strike action is detected.

After determining that a strike action is detected, the watch may determine a field type of the strike action based on obtained positioning data that belongs to a same time period as that of the motion data.

When determining that the field type of the strike action is a fairway, the watch may determine whether a distance between a strike point of the strike action and a strike point of the 3^{rd} strike action is greater than a threshold (for example, the foregoing threshold 1 or threshold 2).

When the distance is greater than the threshold, the watch may determine that the strike action is detected. Therefore, the watch may determine that the strike action is the 5^{th} strike action for the hole 1, and may record strike data of the 5^{th} strike action.

In addition, the watch may switch from the user interface 25 shown in FIG. 4Q to a user interface 25 shown in FIG. 4R as an example. In this case, the user interface 25 is used to display the strike data of the 5^{th} strike action in real time.

### 46: 6^{th} strike action for the hole 1

In the area in which the hole 1 in the golf course a is located, the user continues to swing the golf club to play golf. In this case, based on the embodiments of FIG. 2A, FIG. 2B-1, FIG. 2B-2, FIG. 3A, FIG. 3B-1, and FIG. 3B-2, the watch may perform the following process:

The watch determines, based on obtained motion data that is within a time period, whether a strike action is detected, or determines, based on obtained motion data and sound wave data that are within a same time period, whether a strike action is detected.

After determining that a strike action is detected, the watch may determine a field type of the strike action based on obtained positioning data that belongs to a same time period as that of the motion data.

When determining that the field type of the strike action is a green, the watch may determine that the strike action is the 6^{th} strike action for the hole 1, and may record strike data of the 6^{th} strike action.

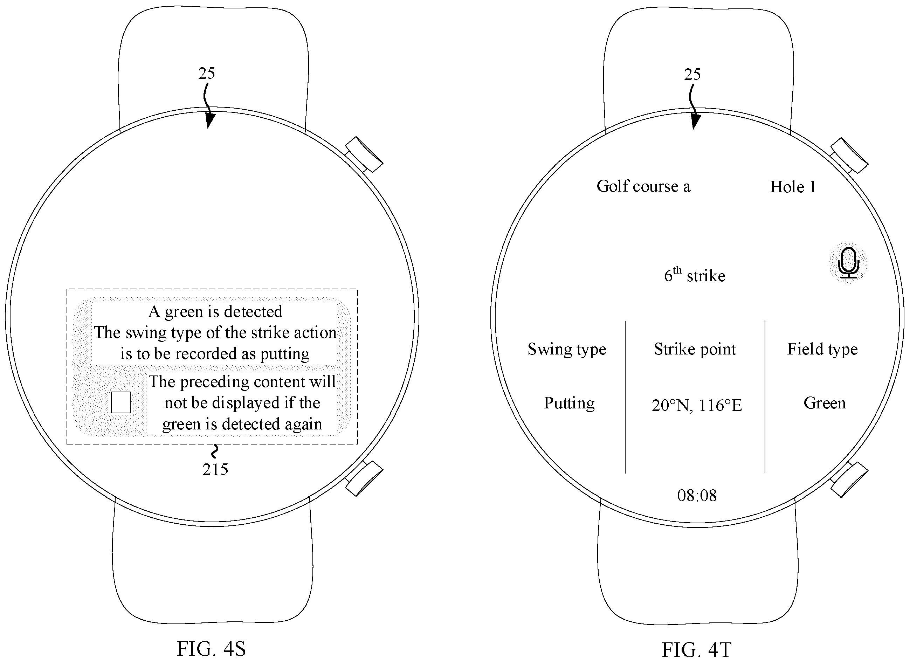

In addition, the watch may further display, on the user interface 25 shown in FIG. 4R, a window 215 shown in FIG. 4S as an example. The window 215 is used to notify the user that the user has entered the green, and record a swing type of the strike action as putting.

In addition, the window 215 is further used to provide an entry for skipping displaying the window 215 after specific duration (for example, 5s) elapses, so that the user can focus on golf without being disturbed by the window 215.

In addition, the window 215 is further used to provide an entry for skipping displaying the window 215 after the green is detected again, so that the user can focus on golf without being disturbed by the window 215 later. Usually, the watch may display the window 215 after detecting, for the first time, that a field type of a strike action is the green. In addition, the watch may continue to display the window 215 after determining that the user has not chosen to skip displaying the window 215 and detecting again that a field type of a strike action is the green.

The representation form of the window 215 may be a feasible implementation of the message 2.

Therefore, after specific duration (for example, 5s) elapses or after an operation of choosing, by the user, to skip displaying the window 215 is received, the watch may switch from displaying a user interface 25 shown in FIG. 4S to displaying a user interface 25 shown in FIG. 4T. In this case, the user interface 25 is used to display the strike data of the 6^{th} strike action in real time.

To sum up, when determining that a golf ball enters the hole-1 307 after the 6^{th} strike action acts on the golf ball, the watch may determine that the user has ended playing golf in the area in which the hole 1 in the golf course a is located, and the watch has recorded the strike data of the six strike actions performed by the user in the area in which the hole 1 in the golf course a is located.

In addition, when displaying the window 207 shown in FIG. 4H, the window 208 shown in FIG. 4J, the window 209 shown in FIG. 4K, the window 210 shown in FIG. 4L, the window 211 shown in FIG. 4N, or the window 215 shown in FIG. 4S, the watch may vibrate and/or produce a beep sound to notify the user.

It can be learned that, after detecting that the user switches from one field type to another field type, the watch may use the window 207 shown in FIG. 4H, the window 211 shown in FIG. 4N, or the window 215 shown in FIG. 4S to notify the user of the field type change in a timely manner, and may display personalized reminder information based on different field types.

In addition, when detecting an abnormal scenario in which a strike action is hand waving, a whiff, a trial swing, practice, or the like, the watch may use the window 208 shown in FIG. 4J, the window 209 shown in FIG. 4K, or the window 210 shown in FIG. 4L to notify the user in a timely manner or ask the user whether a strike action is performed.

The representation form of the foregoing content may be a feasible implementation of the message 1.

Based on the foregoing descriptions, the watch may detect and record, in a same or similar manner, each strike action performed by the user in an area in which a remaining hole in the golf course a is located, and record strike data of each strike action performed by the user in the area in which the remaining hole in the golf course a is located, until the user ends playing golf in the golf course a.

5: The watch displays a sport statistical indicator and a sport strike path based on the recorded strike data of all the strike actions.

After the user ends playing golf in the golf course a, the watch may obtain the sport statistical indicator and the sport strike path based on strike data of each strike action in areas in which all holes in the golf course a are located.

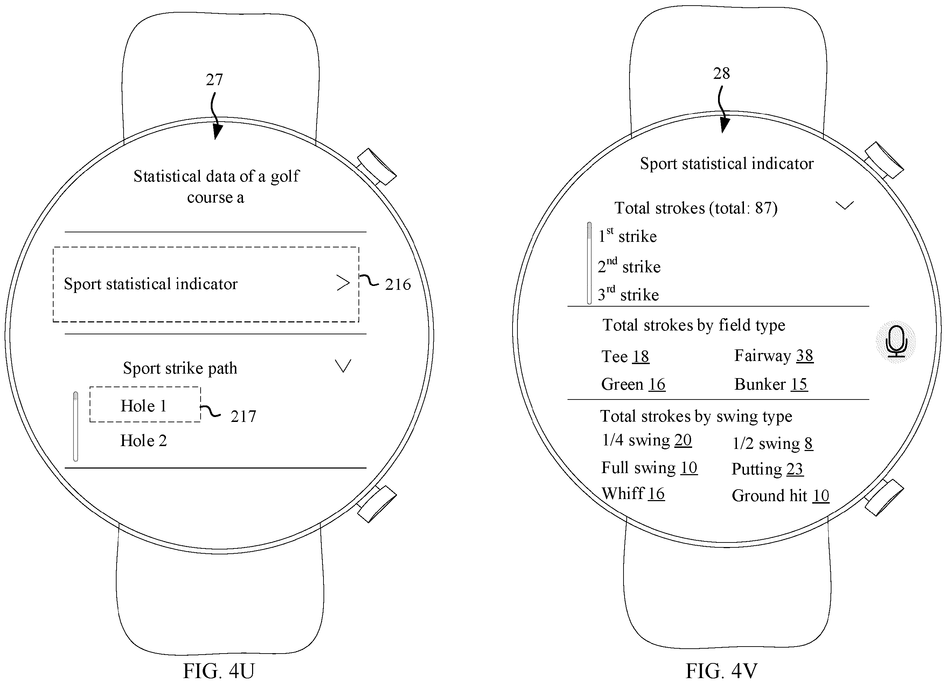

In addition, the watch may display a user interface 27 shown in FIG. 4U as an example. The user interface 27 is used to provide an entry for displaying the sport statistical indicator and the sport strike path.

The user interface 27 may include a control 216 and a control 217. The control 216 is used to provide an entry for displaying the sport statistical indicator. The control 217 is used to provide an entry for displaying a golf strike path 308 for the hole 1 in the golf course a.

After detecting an operation, indicated by the user, of viewing the sport statistical indicator (for example, the control 216 on the user interface 27 shown in FIG. 4U is tapped), the watch may display a user interface 28 shown in FIG. 4V as an example. The user interface 28 is used to display the sport statistical indicator.

In addition, the user interface 28 is further used to provide an entry for editing the strike data of each strike action, for example, modifying, deleting, or adding the strike data; is further used to display, while distinguishing by using a color or in another manner, strike data of a strike action that needs to be confirmed by the user and strike data of a strike action that does not need to be confirmed by the user; and is further used to display data, such as a heart rate and energy, generated in a process of playing golf by the user in the golf course a.

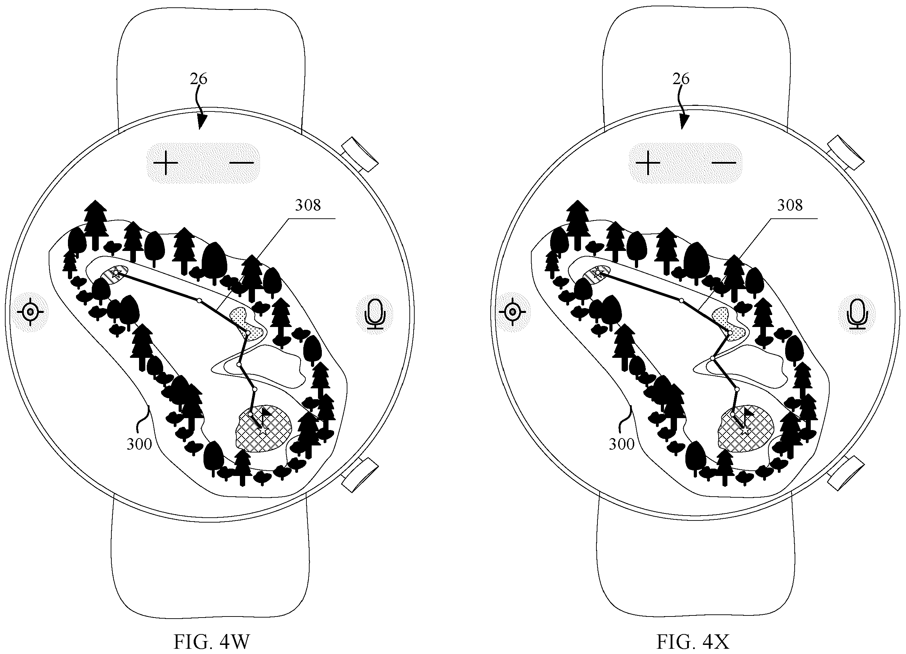

After detecting an operation, indicated by the user, of viewing the sport statistical indicator (for example, the control 217 on the user interface 27 shown in FIG. 4U is tapped), the watch may display, on the user interface 26 shown in FIG. 4O, a golf strike path 308 for the hole 1 that is shown in FIG. 4W as an example; or may display, on the user interface 26 shown in FIG. 4P, a golf strike path 308 for the hole 1 that is shown in FIG. 4X as an example.

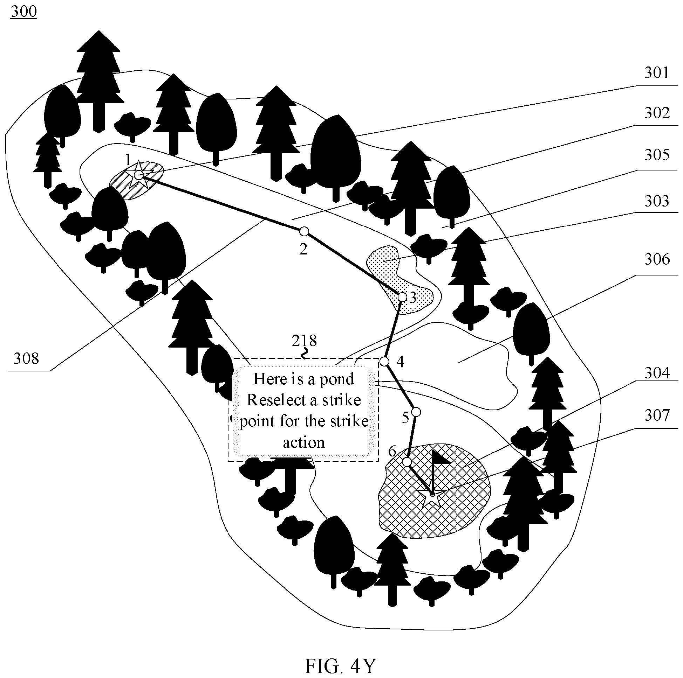

FIG. 4Y is a schematic enlarged view of an area 300, in FIG. 4W, in which the hole 1 is located. As shown in FIG. 4Y, the watch may display the golf strike path 308 for the hole 1 in the area 300 in which the hole 1 is located.

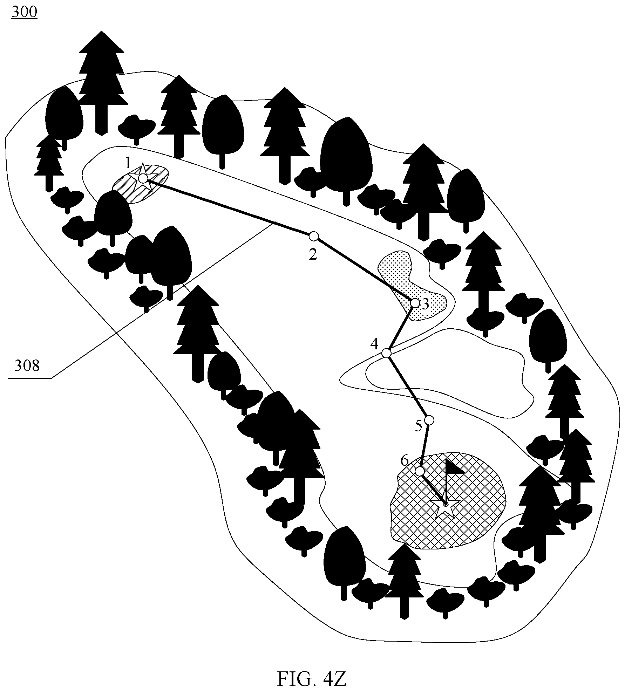

FIG. 4Z is a schematic enlarged view of an area 300, in FIG. 4X, in which the hole 1 is located. As shown in FIG. 4Z, the watch may display the golf strike path 308 for the hole 1 in the area 300 in which the hole 1 is located.

In FIG. 4Y and FIG. 4Z, in the area 300 in which the hole 1 is located, six strike points respectively corresponding to the six strike actions are marked, for example, by digits 1 to 6 and circles, and a strike point of the 1^{st} strike action and a strike point of the 6^{th} strike action are marked, for example, by five-pointed stars.

In addition, in FIG. 4Y, a window 218 is further marked in the area 300 in which the hole 1 is located. The window 218 indicates that a strike point of the 4^{th} strike action in the golf strike path 308 can be modified, so that the user can change the strike point of the strike action in a timely manner.

After detecting an operation, indicated by the user, of re-determining a strike point for the 4^{th} strike action (for example, a strike point of the 4^{th} strike action on a user interface 26 shown in FIG. 4W is moved), the watch may switch from displaying the user interface 26 shown in FIG. 4W to displaying a user interface 26 shown in FIG. 4X, so that the watch can record a strike point obtained through movement by the user as a strike point of the 4^{th} strike action.

It should be noted that, in addition to the foregoing manner of searching for the sport strike path, when receiving text or speech "View the golf strike path for the hole 1" that is input by the user, the watch may display the user interface 26 shown in FIG. 4W or FIG. 4X as an example, so that the user can learn of the golf strike path 308 for the hole 1 in a timely manner.

In addition, the watch may transmit the sport statistical indicator and the sport strike path to an electronic device that is communicatively connected to the watch, so that the electronic device can also display the sport statistical indicator and the sport strike path.

For example, this application provides a sport mode processing method.

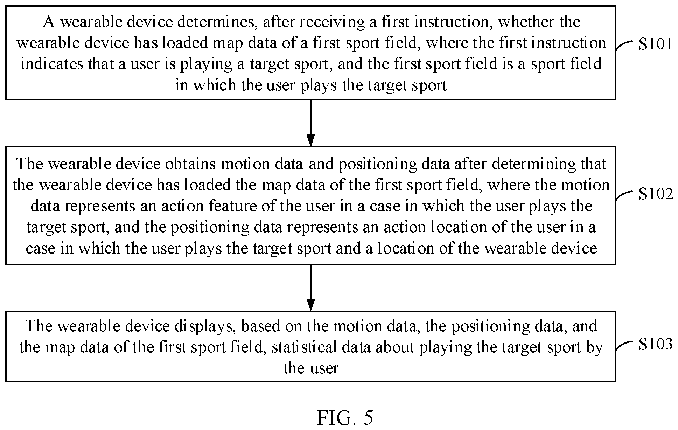

Based on the foregoing descriptions and with reference to FIG. 5, the sport mode processing method provided in this application is described in detail.

FIG. 5 is a schematic flowchart of a sport mode processing method according to an embodiment of this application.

As shown in FIG. 5, the sport mode processing method in this application is applied to a wearable device, and the sport mode processing method in this application may include S101 to S103.

S101: The wearable device determines, after receiving a first instruction, whether the wearable device has loaded map data of a first sport field, where the first instruction indicates that a user is playing a target sport, and the first sport field is a sport field in which the user plays the target sport.

For a specific implementation of the wearable device, refer to the descriptions of the wearable device 100 in the embodiment of FIG. 1. For example, the target sport is golf. For a specific implementation of receiving the first instruction by the wearable device, refer to the foregoing descriptions of enabling the golf mode by the wearable device when the user plays golf. For a specific implementation of the first sport field, refer to the foregoing descriptions of the golf course. For a specific implementation of the map data of the first sport field, refer to the foregoing descriptions of the map data of the golf course. For a specific implementation of S101, refer to the descriptions of determining, by the wearable device after the golf mode is enabled, whether the wearable device has loaded the map data of the golf course in S12 in the embodiment of FIG. 2A and S32 in the embodiment of FIG. 3A. Details are not described herein again.

S102: The wearable device obtains motion data and positioning data after determining that the wearable device has loaded the map data of the first sport field, where the motion data represents an action feature of the user in a case in which the user plays the target sport, and the positioning data represents an action location of the user in a case in which the user plays the target sport and a location of the wearable device.

For a specific implementation of the motion data, refer to the foregoing descriptions of the motion data obtained by using the motion sensor. For a specific implementation of the motion sensor, refer to the foregoing descriptions of the motion sensor. For a specific implementation of the positioning data, refer to the foregoing descriptions of the positioning data obtained by using the positioning sensor. For a specific implementation of the positioning sensor, refer to the foregoing descriptions of the positioning sensor. For a specific implementation of S102, refer to the descriptions of S141 and S142 in the embodiment of FIG. 2A and S341 and S342 in the embodiment of FIG. 3A. Details are not described herein again.

S103: The wearable device displays, based on the motion data, the positioning data, and the map data of the first sport field, statistical data about playing the target sport by the user.

The statistical data may include sport statistical data and a sport strike path. For specific implementations of the sport statistical data and the sport strike path, refer to the foregoing descriptions of the sport statistical data and the sport strike path. For a specific implementation of S103, refer to the descriptions of S16 in the embodiment of FIG. 2A and S36 in the embodiment of FIG. 3A. For a specific implementation of S103, refer to the descriptions of S16 and S17 in the embodiment of FIG. 2A and S36 and S37 in the embodiment of FIG. 3A. Details are not described herein again.

According to the sport mode processing method in this application, in a sport mode of the target sport, after receiving an instruction for instructing the user to play the target sport, the wearable device may determine whether the wearable device has loaded map data of a sport field in which the user plays the target sport. After determining that the wearable device has loaded the map data of the sport field, the wearable device may obtain motion data and positioning data that are generated when the user plays the target sport, where the motion data may represent an action feature of the user in a case in which the user plays the target sport, and the positioning data represents an action location of the user in a case in which the user plays the target sport and a location of the wearable device. The wearable device may display, based on the motion data, the positioning data, and the map data of the sport field, statistical data about playing the target sport by the user. Therefore, the wearable device can display the statistical data, to help instruct the user to review and analyze the target sport. This helps the user learn of a sport habit of the user, a sport status, stability of performance of the user, and the like.

In S101, the wearable device may receive the first instruction, and may determine that the user is playing the target sport.

A specific implementation of the first instruction is not limited in this application.

With reference to several specific embodiments, the following describes in detail a specific implementation of the first instruction by using an example in which the target sport is golf.

In some embodiments, the wearable device displays a first control, where the first control indicates that the user is playing the target sport. Therefore, the wearable device receives the first instruction after receiving a first operation performed by the user on the first control.

For a specific implementation of the first control, refer to the descriptions that the touch component 1 is a software control displayed on a user interface of the wearable device in the manner 1 in S11 in the embodiment of FIG. 2A. For a specific implementation of the first operation, refer to the descriptions of the operation 1 performed on the touch component 1 in the manner 1 in S 11 in the embodiment of FIG. 2A. Therefore, the first instruction is a corresponding instruction for enabling the golf mode in response to the operation 1.

In some other embodiments, when the wearable device includes a hardware button, the wearable device receives a second operation performed by the user on the hardware button, where the second operation indicates that the user is playing the target sport. Therefore, the wearable device receives the first instruction after receiving the second operation.

For a specific implementation of the hardware button, refer to the descriptions that the touch component 1 is a button disposed on the wearable device in the manner 1 in S11 in the embodiment of FIG. 2A. For a specific implementation of the second operation, refer to the descriptions of the operation 1 performed on the touch component 1 in the manner 1 in S11 in the embodiment in FIG. 2A. Therefore, the first instruction is a corresponding instruction for enabling the golf mode in response to the operation 1.

In some other embodiments, the wearable device receives first input, where the first input indicates that the user is playing the target sport. Therefore, the wearable device receives the first instruction after receiving a third operation performed by the user on the first input.

For a specific implementation of the first input, refer to the descriptions that the input 1 is the speech 1 in the manner 1 in S11 in the embodiment of FIG. 2A. For a specific implementation of the third operation, refer to the descriptions of determining that the speech 1 is used to trigger the wearable device to enable the golf mode in the manner 1 in S11 in the embodiment of FIG. 2A. Therefore, the first instruction is a corresponding instruction for enabling the golf mode in response to the speech 1.

In some other embodiments, with reference to the descriptions of the manner 2 in S11 in the embodiment of FIG. 2A, the wearable device may alternatively receive, when determining that the motion data indicates that the user is playing golf, a corresponding first instruction for enabling the golf mode.

In some other embodiments, with reference to the descriptions of the manner 3 in S11 in the embodiment of FIG. 2A, the wearable device may alternatively use, as the first instruction, an instruction 1 sent to the wearable device by an electronic device that is communicatively connected to the wearable device.

To sum up, when receiving the first instruction, the wearable device may determine that the user is playing the target sport. For example, the target sport is golf. The wearable device may determine that the user is playing golf, and may enable the golf mode.

In S101, the wearable device may determine, in a plurality of manners, whether the wearable device has loaded the map data of the first sport field.

In some embodiments, the wearable device determines the first sport field after receiving the first instruction. Therefore, the wearable device determines, based on an identifier of the first sport field, whether the wearable device has loaded the map data of the first sport field.

The identifier of the first sport field may be represented by a name, a number, or the like. For a specific implementation of the foregoing steps, refer to the descriptions of determining, by the wearable device after the golf mode is enabled, whether the wearable device has loaded the map data of the golf course in S12 in the embodiment of FIG. 2A and S32 in the embodiment of FIG. 3A. Details are not described herein again.

In some embodiments, the wearable device displays a second control and a third control on a first user interface, where the second control indicates a second sport field, the second sport field is a sport field obtained through positioning by the wearable device based on a location of the wearable device in the first sport field, the second control is further used to select a sport field, and the third control is used to confirm the sport field.

For a specific implementation of the first user interface, refer to the descriptions of the user interface 23 in the embodiment of FIG. 4C. For a specific implementation of the second control, refer to the descriptions of the control 203 in the embodiment of FIG. 4C. For a specific implementation of the third control, refer to the descriptions of the control 204 in the embodiment of FIG. 4C. For a specific implementation of the second sport field, refer to the descriptions of the course 1 in the golf course a that is displayed in the control 203 in the embodiment of FIG. 4C. Details are not described herein again.

When the user determines that the second sport field obtained by the wearable device through positioning is the sport field in which the user plays the target sport, the wearable device determines the second sport field as the first sport field after receiving a fourth operation performed by the user on the third control.

For a specific implementation of the fourth operation, refer to the descriptions of the operation of tapping the control 204 on the user interface 23 in the embodiment of FIG. 4C. For a specific implementation of the foregoing steps, refer to the descriptions of determining, by the watch after detecting the operation of tapping the control 204 on the user interface 23, that the user has selected the hole 1 in the golf course a in the embodiment of FIG. 4C. Details are not described herein again.

When the user reselects a sport field, the wearable device displays a fourth control on a second user interface after receiving a fifth operation performed by the user on the second control, where the fourth control is used to search for a sport field.

For a specific implementation of the fifth operation, refer to the descriptions of the operation of tapping the control 203 on the user interface 23 in the embodiment of FIG. 4C. For a specific implementation of the second user interface, refer to the descriptions of the user interface 24 in the embodiment of FIG. 4E. For specific implementations of the fourth control and the foregoing steps, refer to the descriptions of displaying, by the watch, the user interface 24 in FIG. 4E after detecting the operation of tapping the control 203 on the user interface 23 in the embodiment of FIG. 4C. Details are not described herein again.

Second input is received after a sixth operation performed by the user on the fourth control is received, where the second input indicates a third sport field. After a seventh operation performed by the user on the second input is received, it is determined that the user has selected the third sport field, and the second user interface is switched to the first user interface for display, where the second control on the first user interface indicates the third sport field.

For a specific implementation of the sixth operation, refer to the descriptions of the operation of tapping the control 2062 on the user interface 24 in the embodiment of FIG. 4E. For a specific implementation of the second input, refer to the descriptions of performing the operation of tapping the control 2062 on the user interface 24 and then entering the text "Golf course c" in the embodiment of FIG. 4E. For a specific implementation of the third sport field, refer to the descriptions of the golf course c in the embodiment of FIG. 4E. For a specific implementation of the seventh operation, refer to the descriptions of the operation of entering the text "Golf course c" and then tapping the text "Golf course c" in the embodiment of FIG. 4E. For a specific implementation of the foregoing steps, refer to the descriptions of determining, by the watch after detecting the operation of tapping the control 2062 on the user interface 24, entering the text "Golf course c", and then tapping the text "Golf course c", that the user has selected the golf course c in the embodiment of FIG. 4E. Details are not described herein again.

Alternatively, for a specific implementation of the sixth operation, refer to the descriptions of the operation of tapping the control 2063 on the user interface 24 in the embodiment of FIG. 4E. For a specific implementation of the second input, refer to the descriptions of performing the operation of tapping the control 2063 on the user interface 24 and then inputting the speech "Golf course c" in the embodiment of FIG. 4E. For a specific implementation of the third sport field, refer to the descriptions of the golf course c in the embodiment of FIG. 4E. For a specific implementation of the seventh operation, refer to the descriptions of the operation of inputting the speech "Golf course c" and then tapping the recognized text "Golf course c" in the embodiment of FIG. 4E. For a specific implementation of the foregoing steps, refer to the descriptions of determining, by the watch after detecting the operation of tapping the control 2063 on the user interface 24, inputting the speech "Golf course c", and then tapping the recognized text "Golf course c", that the user has selected the golf course c and switching from displaying the user interface 24 shown in FIG. 4E to displaying the user interface 23 shown in FIG. 4C in the embodiment of FIG. 4E. Details are not described herein again.

After an eighth operation performed by the user on the third control is received, the third sport field is determined as the first sport field.

When the third sport field selected by the user is "Golf course a", for a specific implementation of the eighth operation, refer to the descriptions of the operation of tapping the control 204 on the user interface 23 in the embodiment of FIG. 4C. For a specific implementation of the foregoing steps, refer to the descriptions of determining, by the watch after detecting the operation of tapping the control 204 on the user interface 23, that the user has selected the hole 1 in the golf course a in the embodiment of FIG. 4C. Details are not described herein again.

In some embodiments, the wearable device switches from the first user interface to a third user interface for display after determining that the wearable device has loaded the map data of the first sport field, where the third user interface is used to display data generated when the user plays the target sport.

For a specific implementation of the first user interface, refer to the descriptions of the user interface 23 in the embodiment of FIG. 4C. For a specific implementation of the third user interface, refer to the descriptions of the user interface 25 in the embodiment of FIG. 4F. For a specific implementation of the foregoing steps, refer to the foregoing descriptions of switching, by the watch, from displaying the user interface 23 shown in FIG. 4C to displaying the user interface 25 shown in FIG. 4F. Details are not described herein again.

In some other embodiments, after determining that the wearable device has not loaded the map data of the first sport field, the wearable device obtains the map data of the first sport field from an electronic device or a server that is communicatively connected to the wearable device; and the wearable device loads the map data of the first sport field based on the obtained map data of the first sport field.

For a specific implementation of the foregoing steps, refer to the foregoing descriptions that the wearable device may load the map data of the golf course in a plurality of manners after determining that the wearable device has not loaded the map data of the golf course in S12 in the embodiment of FIG. 2A and S32 in the embodiment of FIG. 3A. Details are not described herein again.

In some embodiments, when the target sport is golf and the map data of the first sport field indicates a hole identifier and a field type of each location in the first sport field, in S 102, the wearable device may obtain the motion data and the positioning data in a plurality of implementations.

In some embodiments, the wearable device starts the motion sensor and the positioning sensor after determining that the wearable device has loaded the map data of the first sport field. Therefore, the wearable device obtains the motion data by using the motion sensor, and obtains the positioning data by using the positioning sensor.

For a specific implementation of the foregoing steps, refer to the foregoing descriptions of S13, S141, and S142 in the embodiment of FIG. 2A. Details are not described herein again.

In some other embodiments, the wearable device starts the motion sensor, the positioning sensor, and a sound collector after determining that the wearable device has loaded the map data of the first sport field. Therefore, the wearable device obtains the motion data by using the motion sensor, obtains the positioning data by using the positioning sensor, and obtains sound wave data by using the sound collector.

For a specific implementation of the foregoing steps, refer to the foregoing descriptions of S33, S341, S342, and S343 in the embodiment of FIG. 3A. Details are not described herein again.

In some embodiments, the wearable device records strike data of all strike actions based on the motion data, the positioning data, and the map data of the first sport field, where strike data of each strike action includes at least recording time, a cumulative quantity of strokes for a hole to which the strike action belongs, a swing type, a hole identifier, a field type, a strike point, and a cumulative quantity of strokes for a field to which the strike action belongs. Therefore, the wearable device displays the statistical data based on the strike data of all the strike actions, where the statistical data includes at least the strike data of each strike action, a total cumulative quantity of strokes for each field type, a total cumulative quantity of strokes for each hole, stroke distribution for each swing type, and a total cumulative quantity of strokes for all holes.

For a specific implementation of the foregoing steps, refer to the foregoing descriptions of S15 and S 16 in the embodiment of FIG. 2A. Alternatively, for a specific implementation of the foregoing steps, refer to the foregoing descriptions of S35 and S36 in the embodiment of FIG. 3A. Details are not described herein again.

In some embodiments, the wearable device obtains motion data and positioning data within a same time period. The wearable device determines, based on the motion data, whether the wearable device has detected a strike action.

After the wearable device determines that the wearable device has detected a strike action, the wearable device records strike data of the strike action based on the positioning data and the map data of the first sport field when determining that a field type of the strike action is a tee and the strike action is the 1^{st} strike action.

Alternatively, after the wearable device determines that the wearable device has detected the strike action, the wearable device determines, based on the positioning data and the map data of the first sport field when determining that a field type of the strike action is any one of a tee, a hole, or a hazard and the strike action is not the 1^{st} strike action, whether a distance between a strike point of the strike action and a strike point of a strike action with the latest recording time is greater than a first threshold; records strike data of the strike action when the distance is greater than the first threshold; or displays first information when the distance is less than or equal to the first threshold, where the first information is used to ask the user whether a strike action is performed; and records strike data of the strike action when third input is received within first duration and the third input indicates that a strike action is performed; or updates the motion data and the positioning data when fourth input is received within the first duration and the fourth input indicates that no strike action is performed, or when no user input is received after the first duration elapses.

Alternatively, after the wearable device determines that the wearable device has detected the strike action, the wearable device records strike data of the strike action based on the positioning data and the map data of the first sport field when determining that a field type of the strike action is a green or a bunker.

For a specific implementation of the first threshold, refer to the foregoing descriptions of the threshold 1 mentioned in S261 in the embodiment of FIG. 2B-2. For a specific implementation of the first information, refer to the foregoing descriptions of the message 1 mentioned in S272 in the embodiment of FIG. 2B-2. For a specific implementation of the first duration, refer to the foregoing descriptions of the duration 3 mentioned in S281 and S282 in the embodiment of FIG. 2B-2. For a specific implementation of the third input, refer to the foregoing descriptions of the input 5 mentioned in S281 in the embodiment of FIG. 2B-2. For a specific implementation of the fourth input, refer to the foregoing descriptions of the input 6 mentioned in S282 in the embodiment of FIG. 2B-2. For a specific implementation of the foregoing steps, refer to the foregoing descriptions of S21 to S29 in the embodiment of FIG. 2B-1 and FIG. 2B-2. Details are not described herein again.

Alternatively, for a specific implementation of the first threshold, refer to the foregoing descriptions of the threshold 2 mentioned in S461 in the embodiment of FIG. 3B-2. For a specific implementation of the first information, refer to the foregoing descriptions of the message 1 mentioned in S472 in the embodiment of FIG. 3B-2. For a specific implementation of the first duration, refer to the foregoing descriptions of the duration 6 mentioned in S481 and S482 in the embodiment of FIG. 3B-2. For a specific implementation of the third input, refer to the foregoing descriptions of the input 5 mentioned in S481 in the embodiment of FIG. 3B-2. For a specific implementation of the fourth input, refer to the foregoing descriptions of the input 6 mentioned in S482 in the embodiment of FIG. 3B-2. For a specific implementation of the foregoing steps, refer to the foregoing descriptions of S41 to S49 in the embodiment of FIG. 3B-1 and FIG. 3B-2. Details are not described herein again.

In this application, the wearable device may determine, based on the motion data in a plurality of manners, whether the wearable device has detected a strike action.

In some embodiments, when the motion data includes acceleration data and angular velocity data within a same time period, the wearable device determines a first waveform signal feature based on the acceleration data and the angular velocity data within the same time period, where the first waveform signal feature includes at least one of a quantity of wave peaks, a quantity of wave troughs, a wave peak value, a wave trough value, or a difference between a wave peak value and a wave trough value. The wearable device determines a first probability based on the first waveform signal feature, where the first probability indicates a possibility of a strike action. When the first probability is greater than a second threshold, the wearable device determines that the wearable device has detected a strike action. When the first probability is less than or equal to the second threshold, the wearable device updates the acceleration data and the angular velocity data within the same time period.

For a specific implementation of the foregoing steps, refer to the foregoing descriptions of S22 in the embodiment of FIG. 2B-1. Details are not described herein again.

In some other embodiments, when the motion data includes acceleration data and angular velocity data within a same time period, the wearable device determines a second waveform signal feature based on the acceleration data and the angular velocity data within the same time period, where the second waveform signal feature includes at least one of a quantity of wave peaks, a quantity of wave troughs, a wave peak value, a wave trough value, or a difference between a wave peak value and a wave trough value. The wearable device obtains, by using the sound collector, sound wave data that belongs to a same time period as that of the acceleration data and the angular velocity data. The wearable device determines a first sound signal feature based on the sound wave data, where the first sound signal feature includes at least one of a frequency, energy, or a peak value. The wearable device determines a second probability based on the second waveform signal feature and the first sound signal feature, where the second probability indicates a possibility of a strike action. When the second probability is greater than a third threshold, the wearable device determines that the wearable device has detected a strike action. When the second probability is less than or equal to the third threshold, the wearable device updates the acceleration data, the angular velocity data, and the positioning data within the same time period.

For a specific implementation of the foregoing steps, refer to the foregoing descriptions of S42 in the embodiment of FIG. 3B-1. Details are not described herein again.

In some other embodiments, when the motion data includes acceleration data and angular velocity data within a same time period, the wearable device determines a third waveform signal feature based on the acceleration data and the angular velocity data within the same time period, where the third waveform signal feature includes an up-swing displacement and/or a rotational angle. The wearable device obtains, by using the sound collector, sound wave data that belongs to a same time period as that of the acceleration data and the angular velocity data. The wearable device determines, based on the sound wave data, that a second sound signal feature includes at least one of a frequency, energy, or a peak value. The wearable device determines, based on the third waveform signal feature and the second sound signal feature, a probability corresponding to a strike action, a probability corresponding to a hand-waving action, and a probability corresponding to a whiff action. When determining that the probability corresponding to a strike action is a largest value, the wearable device determines that the wearable device has detected a strike action. When determining that the probability corresponding to a strike action is not a largest value, the wearable device updates the acceleration data and the angular velocity data within the same time period.

For a specific implementation of the foregoing steps, refer to the foregoing descriptions of S42 in the embodiment of FIG. 3B-1. Details are not described herein again.

In this application, the statistical data further includes a golf strike path for each hole. Therefore, for any hole in the first sport field, the wearable device selects, based on the strike data of all the strike actions, all strike actions whose hole identifiers are a hole identifier of the hole, and determines recording time and strike points of all the strike actions. The wearable device draws the golf strike path for the hole based on the recording time and the strike points of all the strike actions. The wearable device displays the golf strike path for the hole on an electronic map of the first sport field.

For a specific implementation of the foregoing steps, refer to the foregoing descriptions of S 17 in the embodiment of FIG. 2A. Alternatively, for a specific implementation of the foregoing steps, refer to the foregoing descriptions of S37 in the embodiment of FIG. 3A. Details are not described herein again.

In some embodiments, the wearable device connects, by using a connection line, the strike points of all the strike actions head and tail in ascending order of recording time, and draw the golf strike path for the hole.

For example, this application provides a wearable device, including a memory and a processor. The memory is configured to store program instructions. The processor is configured to invoke the program instructions in the memory, so that the wearable device performs the sport mode processing method in the foregoing embodiments.

For example, this application provides a chip system. The chip system is used in a wearable device including a memory, a display, and a sensor. The chip system includes a processor. When the processor executes computer instructions stored in the memory, the wearable device performs the sport mode processing method in the foregoing embodiments.

For example, this application provides a computer-readable storage medium. The computer-readable storage medium stores a computer program. When the computer program is executed by a processor, a wearable device is enabled to implement the sport mode processing method in the foregoing embodiments.

For example, this application provides a computer program product, including executable instructions. The executable instructions are stored in a readable storage medium. At least one processor of a wearable device may read the executable instructions from the readable storage medium, and the at least one processor executes the executable instructions, so that the wearable device implements the sport mode processing method in the foregoing embodiments.

In the foregoing embodiments, all or some of the functions may be implemented by software, hardware, or a combination of software and hardware. When the functions are implemented by software, all or some of the functions may be implemented in a form of a computer program product. The computer program product includes one or more computer instructions. When the computer program instructions are loaded and executed on a computer, all or some of the processes or functions according to this application are generated. The computer may be a general-purpose computer, a dedicated computer, a computer network, or another programmable apparatus. The computer instructions may be stored in a computer-readable storage medium. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art can understand that all or some of the processes of the methods in the foregoing embodiments may be implemented by a computer program instructing related hardware. The program may be stored in a computer-readable storage medium. When the program is executed, the processes of the method embodiments may be performed. The foregoing storage medium includes any medium that can store program code, such as a ROM, a random access memory RAM, a magnetic disk, or an optical disc.

## Claims

1. A sport mode processing method, applied to a wearable device, wherein the method comprises:
determining, by the wearable device after receiving a first instruction, whether the wearable device has loaded map data of a first sport field, wherein the first instruction indicates that a user is playing a target sport, and the first sport field is a sport field in which the user plays the target sport;
obtaining, by the wearable device, motion data and positioning data after determining that the wearable device has loaded the map data of the first sport field, wherein the motion data represents an action feature of the user in a case in which the user plays the target sport, and the positioning data represents an action location of the user in a case in which the user plays the target sport and a location of the wearable device; and
displaying, by the wearable device based on the motion data, the positioning data, and the map data of the first sport field, statistical data about playing the target sport by the user.

2. The method according to claim 1, wherein the receiving, by the wearable device, a first instruction comprises:
displaying, by the wearable device, a first control, wherein the first control indicates that the user is playing the target sport; and
receiving, by the wearable device, the first instruction after receiving a first operation performed by the user on the first control.

3. The method according to claim 1, wherein when the wearable device comprises a hardware button, the receiving, by the wearable device, a first instruction comprises:
receiving, by the wearable device, a second operation performed by the user on the hardware button, wherein the second operation indicates that the user is playing the target sport; and
receiving, by the wearable device, the first instruction after receiving the second operation.

4. The method according to claim 1, wherein the receiving, by the wearable device, a first instruction comprises:
receiving, by the wearable device, first input, wherein the first input indicates that the user is playing the target sport; and
receiving, by the wearable device, the first instruction after receiving a third operation performed by the user on the first input.

5. The method according to any one of claims 1 to 4, wherein the determining, by the wearable device after receiving a first instruction, whether the wearable device has loaded map data of a first sport field comprises:
determining, by the wearable device, the first sport field after receiving the first instruction; and
determining, by the wearable device based on an identifier of the first sport field, whether the wearable device has loaded the map data of the first sport field.

6. The method according to claim 5, wherein the determining, by the wearable device, the first sport field comprises:
displaying, by the wearable device, a second control and a third control on a first user interface, wherein the second control indicates a second sport field, the second sport field is a sport field obtained through positioning by the wearable device based on a location of the wearable device in the first sport field, the second control is further used to select a sport field, and the third control is used to confirm the sport field; and
determining, by the wearable device, the second sport field as the first sport field after receiving a fourth operation performed by the user on the third control; or
displaying, by the wearable device, a fourth control on a second user interface after receiving a fifth operation performed by the user on the second control, wherein the fourth control is used to search for a sport field; receiving second input after receiving a sixth operation performed by the user on the fourth control, wherein the second input indicates a third sport field; after receiving a seventh operation performed by the user on the second input, determining that the user has selected the third sport field, and switching from the second user interface to the first user interface for display, wherein the second control on the first user interface indicates the third sport field; and determining the third sport field as the first sport field after receiving an eighth operation performed by the user on the third control.

7. The method according to claim 6, wherein the method further comprises:
switching, by the wearable device, from the first user interface to a third user interface for display after determining that the wearable device has loaded the map data of the first sport field, wherein the third user interface is used to display data generated when the user plays the target sport.

8. The method according to claim 6 or 7, wherein the method further comprises:
obtaining, by the wearable device after determining that the wearable device has not loaded the map data of the first sport field, the map data of the first sport field from an electronic device or a server that is communicatively connected to the wearable device; and
loading, by the wearable device, the map data of the first sport field based on the obtained map data of the first sport field.

9. The method according to any one of claims 1 to 8, wherein when the target sport is golf and the map data of the first sport field indicates a hole identifier and a field type of each location in the first sport field, the obtaining, by the wearable device, motion data and positioning data after determining that the wearable device has loaded the map data of the first sport field comprises:
starting, by the wearable device, a motion sensor and a positioning sensor after determining that the wearable device has loaded the map data of the first sport field, obtaining the motion data by using the motion sensor, and obtaining the positioning data by using the positioning sensor; or
starting, by the wearable device, a motion sensor, a positioning sensor, and a sound collector after determining that the wearable device has loaded the map data of the first sport field, obtaining the motion data by using the motion sensor, obtaining the positioning data by using the positioning sensor, and obtaining sound wave data by using the sound collector.

10. The method according to claim 9, wherein the displaying, by the wearable device based on the motion data, the positioning data, and the map data of the first sport field, statistical data about playing the target sport by the user comprises:
recording, by the wearable device, strike data of all strike actions based on the motion data, the positioning data, and the map data of the first sport field, wherein strike data of each strike action comprises at least recording time, a cumulative quantity of strokes for a hole to which the strike action belongs, a swing type, a hole identifier, a field type, a strike point, and a cumulative quantity of strokes for a field to which the strike action belongs; and
displaying, by the wearable device, the statistical data based on the strike data of all the strike actions, wherein the statistical data comprises at least the strike data of each strike action, a total cumulative quantity of strokes for each field type, a total cumulative quantity of strokes for each hole, stroke distribution for each swing type, and a total cumulative quantity of strokes for all holes.

11. The method according to claim 10, wherein for any one of all the strike actions, the recording, by the wearable device, strike data of all strike actions based on the motion data, the positioning data, and the map data of the first sport field comprises:
obtaining, by the wearable device, motion data and positioning data within a same time period;
determining, by the wearable device based on the motion data, whether the wearable device has detected a strike action; and
after the wearable device determines that the wearable device has detected the strike action, recording, by the wearable device, strike data of the strike action based on the positioning data and the map data of the first sport field when determining that a field type of the strike action is a tee and the strike action is the 1^{st} strike action; or
after the wearable device determines that the wearable device has detected the strike action, determining, by the wearable device based on the positioning data and the map data of the first sport field when determining that a field type of the strike action is any one of a tee, a hole, or a hazard and the strike action is not the 1^{st} strike action, whether a distance between a strike point of the strike action and a strike point of a strike action with the latest recording time is greater than a first threshold; recording strike data of the strike action when the distance is greater than the first threshold; or displaying first information when the distance is less than or equal to the first threshold, wherein the first information is used to ask the user whether a strike action is performed; and recording strike data of the strike action when third input is received within first duration and the third input indicates that a strike action is performed; or updating the motion data and the positioning data when fourth input is received within the first duration and the fourth input indicates that no strike action is performed, or when no user input is received after the first duration elapses; or
after the wearable device determines that the wearable device has detected the strike action, recording, by the wearable device, strike data of the strike action based on the positioning data and the map data of the first sport field when determining that a field type of the strike action is a green or a bunker.

12. The method according to claim 11, wherein when the motion data comprises acceleration data and angular velocity data within a same time period, the determining, by the wearable device based on the motion data, whether the wearable device has detected a strike action comprises:
determining, by the wearable device, a first waveform signal feature based on the acceleration data and the angular velocity data within the same time period, wherein the first waveform signal feature comprises at least one of a quantity of wave peaks, a quantity of wave troughs, a wave peak value, a wave trough value, or a difference between a wave peak value and a wave trough value;
determining, by the wearable device, a first probability based on the first waveform signal feature, wherein the first probability indicates a possibility of a strike action; and
when the first probability is greater than a second threshold, determining, by the wearable device, that the wearable device has detected a strike action; or
when the first probability is less than or equal to the second threshold, updating, by the wearable device, the acceleration data and the angular velocity data within the same time period.

13. The method according to claim 11, wherein when the motion data comprises acceleration data and angular velocity data within a same time period, the determining, by the wearable device based on the motion data, whether the wearable device has detected a strike action comprises:
determining, by the wearable device, a second waveform signal feature based on the acceleration data and the angular velocity data within the same time period, wherein the second waveform signal feature comprises at least one of a quantity of wave peaks, a quantity of wave troughs, a wave peak value, a wave trough value, or a difference between a wave peak value and a wave trough value;
obtaining, by the wearable device by using the sound collector, sound wave data that belongs to a same time period as that of the acceleration data and the angular velocity data;
determining, by the wearable device, a first sound signal feature based on the sound wave data, wherein the first sound signal feature comprises at least one of a frequency, energy, or a peak value;
determining, by the wearable device, a second probability based on the second waveform signal feature and the first sound signal feature, wherein the second probability indicates a possibility of a strike action; and
when the second probability is greater than a third threshold, determining, by the wearable device, that the wearable device has detected a strike action; or
when the second probability is less than or equal to the third threshold, updating, by the wearable device, the acceleration data, the angular velocity data, and the positioning data within the same time period.

14. The method according to claim 11, wherein when the motion data comprises acceleration data and angular velocity data within a same time period, the determining, by the wearable device based on the motion data, whether the wearable device has detected a strike action comprises:
determining, by the wearable device, a third waveform signal feature based on the acceleration data and the angular velocity data within the same time period, wherein the third waveform signal feature comprises an up-swing displacement and/or a rotational angle;
obtaining, by the wearable device by using the sound collector, sound wave data that belongs to a same time period as that of the acceleration data and the angular velocity data;
determining, by the wearable device based on the sound wave data, that a second sound signal feature comprises at least one of a frequency, energy, or a peak value;
determining, by the wearable device based on the third waveform signal feature and the second sound signal feature, a probability corresponding to a strike action, a probability corresponding to a hand-waving action, and a probability corresponding to a whiff action; and
determining, by the wearable device when determining that the probability corresponding to a strike action is a largest value, that the wearable device has detected a strike action; or
updating, by the wearable device when determining that the probability corresponding to a strike action is not a largest value, the acceleration data and the angular velocity data within the same time period.

15. The method according to any one of claims 9 to 14, wherein the statistical data further comprises a golf strike path for each hole.

16. The method according to claim 15, wherein for any hole in the first sport field, displaying, by the wearable device, a golf strike path for the hole comprises:
selecting, by the wearable device based on the strike data of all the strike actions, all strike actions whose hole identifiers are a hole identifier of the hole, and determining recording time and strike points of all the strike actions;
drawing, by the wearable device, the golf strike path for the hole based on the recording time and the strike points of all the strike actions; and
displaying, by the wearable device, the golf strike path for the hole on an electronic map of the first sport field.

17. The method according to claim 16, wherein the drawing, by the wearable device, the golf strike path for the hole based on the recording time and the strike points of all the strike actions comprises:
connecting, by the wearable device by using a connection line, the strike points of all the strike actions head and tail in ascending order of recording time, and drawing the golf strike path for the hole.

18. A wearable device, comprising a processor, a memory, a motion sensor, a positioning sensor, and a display, wherein the memory, the motion sensor, the positioning sensor, and the display are all coupled to the processor, the memory is configured to store program instructions, and the processor is configured to invoke the program instructions in the memory, so that the wearable device performs the sport mode processing method according to any one of claims 1 to 17.

19. A computer-readable storage medium, comprising computer instructions, wherein when the computer instructions run on a wearable device, the wearable device is enabled to perform the sport mode processing method according to any one of claims 1 to 17.

20. A computer program product, wherein when the computer program product is run on a computer, the computer is enabled to perform the sport mode processing method according to any one of claims 1 to 17.
